# EUROPÄISCHE PATENTSCHRIFT

(11) **EP 4 074 894 B1**
(45) Veröffentlichungstag und Bekanntmachung des Hinweises auf die Patenterteilung: **09.08.2023**
(21) Anmeldenummer: 22164240.8
(22) Anmeldetag: 24.03.2022
(51) Int. Cl.: E01C 19/48

(54) **VERFAHREN ZUR WARTUNG ODER FUNKTIONSUMFANGSERWEITERUNG EINER SELBSTFAHRENDEN MASCHINE SOWIE FUNKTIONS- ODER WARTUNGSMANAGEMENTSYSTEM**
METHOD FOR THE MAINTENANCE OR ADDITION OF FUNCTIONALITY TO A SELF-PROPELLED MACHINE AND FUNCTION OR MAINTENANCE MANAGEMENT SYSTEM
PROCÉDÉ D'ENTRETIEN OU D'EXTENSION DES FONCTIONNALITÉS D'UNE MACHINE AUTONOME, AINSI QUE SYSTÈME DE GESTION DES FONCTIONS OU DE L'ENTRETIEN

(30) Priorität: 16.04.2021 EP 21168771
(43) Veröffentlichungstag der Anmeldung: 19.10.2022
(73) Patentinhaber: BOMAG GmbH, 56154 Boppard (DE)
(72) Erfinder: SOMMER, Benjamin, 56154 Boppard (DE); GEERS, Christian, 56154 Boppard (DE); METZ, Dietmar, 56154 Boppard (DE); MÜLLER, Hermann, 56154 Boppard (DE); SCHRÖDER, Mathias, 56154 Boppard (DE)
(74) Vertreter: Tomerius, Isabel

(56) Entgegenhaltungen:
- EP-A1- 1 837 255
- DE-A1-102011 107 554
- DE-A1-102016 015 480
- DE-A1-102016 103 128
- DE-A1-102018 004 598
- US-A1- 2018 051 442
- US-A1- 2019 200 277

## Beschreibung

Die Erfindung betrifft ein Verfahren zur Wartung oder Funktionsumfangserweiterung einer selbstfahrenden Baumaschine zur Bodenbearbeitung, insbesondere einer Tandemwalze, einem Walzenzug, einer Gummiradwalze, einem Müllverdichter, einem Straßenfertiger, einer Straßenfräse, einem Recycler oder einem Stabilisierer. Darüber hinaus betrifft die Erfindung ein Funktions- oder Wartungsmanagementsystem zur Durchführung eines entsprechenden Verfahrens.

Gattungsgemäße Maschinen, wie sie beispielsweise in der DE 10 2016 015 480 A1 beschrieben werden, sind selbstfahrende Baumaschinen, insbesondere Straßenbaumaschinen, sowie Müllverdichter. Gattungsgemäße Straßenbaumaschinen werden typischerweise zur Verdichtung von Böden oder Asphaltschichten, sowie zum Einbau oder zum Ausbau von Asphaltschichten eingesetzt. Gattungsgemäße Müllverdichter werden zur Verdichtung von Mülldeponien verwendet. Sämtliche gattungsgemäßen Maschinen sind heutzutage in einer Vielzahl unterschiedlicher Konfigurationen verfügbar, sowohl was Hardware als auch Software betrifft. Auf diese Weise kann jeder Anwender die für ihn passende Maschinenkonfiguration aus den von den Herstellern angebotenen Zusatzoptionen auswählen. Eine für den Anwender optimale Maschinenkonfiguration kann sich allerdings während der Standzeit gattungsgemäßer Maschinen ändern, nicht zuletzt beispielsweise wegen unterschiedlicher Anforderungen eines jeweiligen Einsatzes. So kommt es regelmäßig vor, dass zusätzliche Hardware an den gattungsgemäßen Maschinen nachgerüstet oder gegebenenfalls auch wieder abgerüstet werden muss. Oftmals muss die entsprechende Hardware ebenfalls softwareseitig freigeschaltet oder wieder abgeschaltet werden. Solch ein Verfahren ist grundsätzlich beispielsweise aus der DE 10 2018 004 598 A1 oder der DE 10 2011 107 554 A1 bekannt. Darüber hinaus benötigen Anwender oftmals reine Software-Nachrüstungen, beispielsweise, wenn ein zusätzlicher Steueralgorithmus für ein Arbeitsaggregat der Maschine notwendig oder gewünscht ist oder wenn Parameter von vorhandenen Steueralgorithmen modifiziert werden sollen (beispielsweise ein neuer Parametersatz für die Motorsteuerung bei Einsatz in warmen Gebieten, ein effizienterer Motorbetrieb etc.). Für derartige Umrüstvorgänge muss üblicherweise ein umständlicher Kommunikationsweg mit dem Hersteller der Maschine eingeschlagen werden. So müssen oftmals Details zur Maschine und der gewünschten Konfigurationsänderung telefonisch mit einer Service-Hotline des Maschinenherstellers besprochen werden. Hierbei müssen typischerweise lange Zahlenkolonnen, wie die Seriennummer der Maschine oder Materialnummern, mündlich durchgegeben werden. Dieser Vorgang ist mühsam, zeitraubend, nicht prozesssicher und fehleranfällig.

Eine ähnliche Situation besteht, wenn Wartungsarbeiten an den gattungsgemäßen Maschinen durchgeführt werden müssen. Typischerweise sind die Wartungsintervalle einer schriftlichen Dokumentation, beispielsweise einem Servicehandbuch, zu entnehmen. Gegebenenfalls sind am Bordcomputer zusätzlich Hilfetexte für die Wartungsarbeiten hinterlegt, die allerdings nicht immer auf dem neuesten Stand sind. Insbesondere sind die auf den gattungsgemäßen Maschinen vorhandenen Bordcomputer, auf denen die Software der Maschine läuft, typischerweise nicht online mit dem Internet verbunden. Software-Updates können häufig nur von Service-Technikern durchgeführt werden. Es ist daher für den Hersteller der Maschine nicht möglich, immer aktuelle Informationen zur Wartung für den Bediener am Bordcomputer zur Verfügung zu stellen und/oder ihm das optimale Setting zur Verfügung zu stellen. Auch hier kommt es daher häufig beispielsweise zu telefonischen Rückfragen, die wiederum mit den bereits beschriebenen Problemen behaftet, mühsam und zeitraubend sind.

Es ist daher die Aufgabe der vorliegenden Erfindung, eine Möglichkeit anzugeben, wie eine Funktionsumfangserweiterung oder eine Wartung bei einer gattungsgemäßen Maschine einfacher, wirtschaftlicher und schneller gestaltet werden kann. Ein Ziel der Erfindung ist es, dem Bediener der gattungsgemäßen Maschine ein höchstmögliches Maß an Flexibilität bezüglich der Hardware- und/oder Softwarekonfiguration seiner Maschine zu ermöglichen. Gleichzeitig soll sichergestellt werden, dass durch eine Konfigurationsänderung an der Maschine kein Sicherheitsrisiko entsteht. Ein weiteres Ziel liegt darin, die Prozesssicherheit und eine automatisierte, maschinelle und lückenlose Dokumentation sicherzustellen.

Die Lösung der Aufgabe gelingt mit einem Verfahren und einem Funktions- oder Wartungsmanagementsystem gemäß den unabhängigen Ansprüchen. Bevorzugte Weiterbildungen sind in den abhängigen Ansprüchen angegeben.

Konkret gelingt die Lösung durch ein Verfahren zur Wartung oder Funktionsumfangserweiterung einer selbstfahrenden Maschine, besonders Straßenbaumaschine, insbesondere Tandemwalze, Walzenzug, Gummiradwalze, Müllverdichter, Straßenfertiger, Straßenfräse, Recycler oder Stabilisierer, umfassend die Schritte:
- Erzeugen eines auf kurze Entfernung identifizierbaren Codes durch eine Steuereinrichtung der Maschine entweder selbsttätig durch die Steuereinrichtung nach einem Ablauf eines Wartungsintervalls oder nach einer Anfrage eines Bedieners nach einer Funktionsumfangserweiterung, wobei der Code eine Information über wenigstens einen sich im Laufe des Betriebs der Maschine ändernden Maschinenzustand enthält,
- Identifizieren des Codes durch ein mobiles Endgerät,
- Übermitteln der im Code enthaltenen Informationen an einen zentralen Server, insbesondere durch das mobile Endgerät,
- Übermitteln eines Freigabecodes vom Server an das mobile Endgerät,
- Übermitteln des Freigabecodes an der Steuereinrichtung der Maschine,
- Freischalten des Wartungsintervalls oder der Funktionsumfangserweiterung.

Die kurze Entfernung beziehtsich beispielsweise insbesondere auf eine Distanz von maximal 1 m, bevorzugt maximal 50 cm, besonders bevorzugt maximal 40 cm, maximal 30 cm, maximal 20 cm oder maximal 10 cm. Insbesondere soll die Maschine hierbei nicht mit einem überregionalen Kommunikationsnetzwerk, beispielsweise dem Internet oder dem Telefonnetz, in Verbindung stehen müssen. Es kommt lediglich auf eine Datenübertragung zwischen der Maschine beziehungsweise der Steuereinrichtung der Maschine und dem mobilen Endgerät an.

Da als mobiles Endgerät bevorzugt ein Smartphone infrage kommt, sind auch sämtliche kabellosen Datenverbindungen, die eine direkte Datenübertragung zwischen der Maschine beziehungsweise der Steuereinrichtung der Maschine und einem Smartphone ermöglichen, einsetzbar. Wie bereits angedeutet, ist es hierbei bevorzugt, dass die Datenübertragung unmittelbar zwischen dem mobilen Endgerät und der Maschine beziehungsweise der Steuereinrichtung erfolgt, ohne dass beispielsweise das Internet zwischengeschaltet ist Der auf kurze Entfernung identifizierbare Code kann beispielsweise als von einer kurzen Funkstrecke übermitteltes Signal realisiert werden. So ist es in einer bevorzugten Ausführungsform des Verfahrens vorgesehen, dass der auf kurze Entfernung identifizierbare Code ein Signal zur kabellosen Übertragung von Daten umfasst, insbesondere ein Near Field Communication (NFC)-, Bluetooth-, Wireless Local Area Network (WLAN)-, Radio-Frequency Identification (RFID)- oder Infrarot-Signal. Ein Vorteil dieser Ausführungsform liegt darin, dass auch der nachstehend noch näher beschriebene Freigabecodes direkt von dem mobilen Endgerät an die Steuereinrichtung übermitteltwerden kann, ohne dass der Bediener diesen manuell an der Steuereinrichtung eingeben muss. Auf diese Weise wird dem Bediener zum einen Arbeit erspart und zum anderen eine Fehlerquelle bei der Eingabe des Codes ausgeschlossen.

Eine besonders bevorzugte Variante der Erfindung sieht die Nutzung eines optoelektronisch lesbaren Codes vor. Auf diese Weise muss die Maschine lediglich eine Anzeigeeinrichtung aufweisen, an der der Code angezeigt wird, und eine Möglichkeit bieten, dass ein Bediener einen Freigabecode an der Steuereinrichtung eingeben kann. Die Maschine muss daher keine Einrichtung zur kabellosen Datenübertragung umfassen. Diese Variante der Erfindung betrifft also ein Verfahren zur Wartung oder Funktionsumfangserweiterung einer selbstfahrenden Maschine, besonders Straßenbaumaschine, insbesondere Tandemwalze, Walzenzug, Gummiradwalze, Müllverdichter, Straßenfertiger, Straßenfräse, Recycler oder Stabilisierer, umfassend die Schritte:
- Anzeigen eines optoelektronisch lesbaren Codes auf einer Anzeigeeinrichtung einer Steuereinrichtung der Maschine entweder selbsttätig durch die Steuereinrichtung nach einem Ablauf eines Wartungsintervalls oder nach einer Anfrage eines Bedieners nach einer Funktionsumfangserweiterung, wobei der Code eine Information über wenigstens einen sich im Laufe des Betriebs der Maschine ändernden Maschinenzustand enthält,
- Lesen des Codes durch ein mobiles Endgerät,
- Übermitteln der im Code enthaltenen Informationen an einen zentralen Server, insbesondere durch das mobile Endgerät,
- Übermitteln eines Freigabecodes vom Server an das mobile Endgerät,
- Eingeben des Freigabecodes an der Steuereinrichtung der Maschine durch den Bediener,
- Freischalten des Wartungsintervalls oder der Funktionsumfangserweiterung.

Gattungsgemäße Maschinen sind üblicherweise mit einem Bordcomputer ausgestattet, auf dem eine Software zur Steuerung der Maschine und zur Interaktion mit dem Bediener betrieben wird. Die erfindungsgemäße Steuereinrichtung kann vom Bordcomputer umfasst oder der Bordcomputer selbst sein. Die Steuereinrichtung kann dabei Hardware und/oder Software umfassen, die für die Durchführung der maschinenseitigen Schritte des erfindungsgemäßen Verfahrens notwendig ist. Die Steuereinrichtung umfasst eine Anzeigeeinrichtung, beispielsweise einen Bildschirm oder ein Display, insbesondere einen Touchscreen. Bei der Anzeigeeinrichtung kann es sich beispielsweise um eine der Anzeigeeinrichtungen des Bordcomputers der Maschine handeln.

An der Steuereinrichtung, beispielsweise unterstützt durch die Anzeige von Informationen über die Anzeigeeinrichtung, kann ein Bediener eine Funktionsumfangserweiterung auswählen und sich beispielsweise Informationen zu dieser anzeigen lassen. Dies kann beispielsweise durch den Maschinenbediener gezielt unter einem entsprechenden Menüpunkt aufrufen oder von der Maschine bzw. dem Bordcomputer vorgeschlagen werden. Bei einer erfindungsgemäßen Funktionsumfangserweiterung kann es sich um jegliche Konfigurationsänderung der Maschine handeln. Hierbei kommen sowohl Änderungen der Hardwarekonfiguration als auch Änderungen der Softwarekonfiguration als auch beides gleichzeitig infrage. Eine Funktionsumfangserweiterung bezeichnet also beispielsweise den An- oder Abbau einer Hardwarekomponente, beispielsweise eines Zusatzgeräts, und/oder die Aktivierung oder Deaktivierung einer Softwarekomponente. Beispielsweise kann eine Funktionsumfangserweiterung darin liegen, eine softwareseitige Steuerungsoption für die Maschine an sich oder eine spezielle Arbeitseinheit der Maschine freizuschalten. Die Erfindung bezieht sich dabei insbesondere auf Softwareoptionen, die von der auf der Maschine verfügbaren Software bereits ermöglicht, aber gegebenenfalls noch nicht freigeschaltet ist. Beispielsweise kann es sich um die Aktivierung von bestimmten Parametersätzen aus einer Anzahl von auf der Maschine gespeicherten Parametersätzen handeln, wie beispielsweise unterschiedlicher Sprachpakete. Die erfindungsgemä-ßen Funktionsumfangserweiterungen auf Softwareebene benötigen also keine Aktualisierung oder Ergänzung der Software der Maschine an sich, im Sinne von zusätzlichem oder geändertem Quelltext. Es werden lediglich bereits in der Software angelegte und realisierbare Funktionen aktiviert beziehungsweise freigeschaltet. In einem einfachen Fall kann es beispielsweise sein, dass eine Funktionsumfangserweiterung darin liegt, eine alternative Darstellungsweise oder Aufbereitung von Informationen auf der Anzeigeeinrichtung einzustellen. In einer Weiterbildung ist es jedoch auch möglich, über einen Datenaustausch vom mobilen Endgerät zur Steuereinrichtung einen zusätzlichen oder modifizierten Quelltext, beispielsweise im Sinne eines Softwareupdates, zu übermitteln. Auch kann eine Funktionsumfangserweiterung darin liegen, eine Hardwarekomponente an die Maschine anzubauen und diese Hardwarekomponente dann softwareseitig freizuschalten, sodass die Steuereinrichtung die neue Hardwarekomponente erkennt und steuern kann. Erfindungsgemäß wird außerdem unter einer Funktionsumfangserweiterung auch ein Rückbau einer Hardwarekomponente und/oder einer Softwarekomponente verstanden, also der umgekehrte Vorgang. In diesem Fall liegt die Erweiterung darin, dass durch den Verzicht auf nicht genutzte Komponenten ein einfacherer und wirtschaftlicher Betrieb der Maschine gewährleistet ist Im Folgenden wird dieses Verfahren am Beispiel eines optischen Codes als Übertragungsvariante beschrieben. Wie vorstehend erwähnt, kann die Übertragungsvariante alternativ auch als kurze Funkstrecke realisiert werden. Die nachstehend genannten Merkmale und Weiterbildungen gelten daher im übertragenen Sinne ebenfalls für die Ausführungsformen des auf kurze Entfernung identifizierbaren Codes, beispielsweise mit kurzer Funkstrecke.

Möchte der Bediener die gewählte Funktionsumfangserweiterung durchführen und bestätigt dies an der Steuereinrichtung, so zeigt ihm die Steuereinrichtung auf der Anzeigeeinrichtung einen optoelektronisch lesbaren Code an. Bei diesem handelt es sich insbesondere um einen Barcode oder einen QR-Code. Dieser maschinenlesbare Code enthält die relevanten Daten zur vom Bediener gewünschten Funktionsumfangserweiterung, wie nachstehend noch näher erläutert wird. Darüber hinaus enthält der Code eine Information über wenigstens einen sich im Laufe des Betriebs der Maschine ändernden Maschinenzustand. Die Anzeigeeinrichtung ist dabei derart ausgebildet, dass sie den Code derart anzeigt, dass dieser von einem mobilen Endgerät gelesen werden kann, beispielsweise über eine Kamera des mobilen Endgerätes. Bei dem mobilen Endgerät wiederum handelt es sich vorzugsweise um ein Smartphone oder Tablet, insbesondere im Besitz des Bedieners der Maschine. Diese verfügen typischerweise über die notwendige Hardware, um optoelektronisch lesbare Codes auszulesen, wie beispielsweise eine digitale Kameraeinrichtung. Darüber hinaus haben die Bediener der Maschinen ihre Smartphones typischerweise durchgehend bei sich, so dass durch die Verwendung dieser als mobile Endgeräte kein zusätzlicher Aufwand entsteht. Auf dem mobilen Endgerät wird eine Software des Maschinenherstellers betrieben, beispielsweise eine Service-App. Wenn vorliegend von Funktionen des mobilen Endgerätes gesprochen wird, so wird vorausgesetzt, dass dieses eine Software, beispielsweise die Service-App, enthält, welche die entsprechenden Funktionen unterstützt beziehungsweise durchführt. Mit dem mobilen Endgerät, insbesondere unter Nutzung der auf dem mobilen Endgerät installierten Service-App, kann der Code gelesen und gegebenenfalls auch verarbeitet werden. Über die rein optische Anzeige des Codes auf der Anzeigeeinrichtungen der Maschine hinaus besteht daher keine Datenverbindung zwischen der Maschine und dem mobilen Endgerät Die über den Code auf der Anzeigeeinrichtung von der Steuereinrichtung beziehungsweise der Maschine angezeigten Informationen werden vom mobilen Endgerät, beispielsweise über eine vom mobilen Endgerät in an sich bekannterWeise umfassten Kameraeinrichtung, aufgenommen und softwareseitig weiterverarbeitet. Beispielsweise können dem Bediener Informationen über den mit dem Code verknüpften Vorgang, beispielsweise die Funktionsumfangserweiterung, angezeigt werden. Auch weitergehende mit der Funktionsumfangserweiterung verknüpfte Informationen, wie beispielsweise erforderliche Zahlungsvorgänge, Statusanzeigen, zusätzliche Konfigurationsanforderungen, Servicekontaktdaten etc., können dann am mobilen Endgerät durch die Service-App generiert und angezeigtwerden. Da das mobile Endgerät typischerweise über eine Internetverbindungverfügt, beispielsweise GSM, LTE, WLAN etc., können diese Informationen tagesaktuell von einem zentralen Server, beispielsweise des Maschinenherstellers, abgerufen werden und den Bediener daher immer mit aktuellen Informationen versorgen, auch wenn diese Informationen auf der Maschine selbst nicht verfügbar sind. Darüber hinaus kann beispielsweise die Sprache, in der die Informationen dargestellt werden, bevorzugt selbsttätig, an die aktuelle Spracheinstellung des mobilen Endgerätes angepasst werden, um sicherzustellen, dass der Bediener die Informationen in einer ihm bekannten und geläufigen Sprache erhält.

Wie bereits erwähnt, enthält der Code eine Information über wenigstens einen sich im Laufe des Betriebs der Maschine ändernden Maschinenzustand. Entsprechend ändert sich diese Information dynamisch in Laufe des Betriebs der Maschine. Hierdurch ändert sich auch die im Code enthaltene Information, die je nach dem Zeitpunkt der Erstellung des Codes unterschiedlich sein kann. Unter einem sich im Laufe des Betriebs der Maschine ändernden Maschinenzustand werden sämtliche Zustände verstanden, deren aktueller Wertsich im Laufe der Zeit beziehungsweise im Laufe des Betriebs der Maschine ändern kann. Hierunter fallen also beispielsweise Informationen zu Betriebszeiten der Maschine, zu Betriebszeiten von Arbeitseinrichtungen oder zu Betriebszeiten von Verschleißteilen, die im Laufe der Zeit beziehungsweise des Betriebs zunehmen. Darüber hinaus fallen hierunter ebenfalls Informationen zu Wartungsintervallen beziehungsweise zum Ablauf von Wartungsintervallen oder zu Konfigurationsdaten der Maschine. Die Konfigurationsdaten der Maschine können sich beispielsweise durch eine Funktionsumfangserweiterung gemäß der vorliegenden Beschreibung ändern, beispielsweise weil die Maschine nach einer derartigen Änderung mehr oder weniger Arbeitseinrichtungen oder eine andere Version einer Software aufweist. Mit anderen Worten ist hiermiteine dynamische Information über einen Maschinenzustand gemeint, die im Code enthalten sein soll. Sich nicht im Laufe des Betriebs der Maschine ändernden Maschinenzustände sind dagegen beispielsweise statische Kennzeichen der Maschine wie eine Seriennummer oder eine andere Identifikation. Der sich im Laufe des Betriebs der Maschine ändernde Maschinenzustand kann sich daher insbesondere auf sämtliche nachstehend genannten Informationen beziehen, die sich im Laufe des Betriebs ändern, und die als Information in den Code aufgenommen beziehungsweise in diesem gespeichert werden können. Insbesondere ist vorgesehen, dass die Steuereinrichtung die sich im Laufe des Betriebs der Maschine ändernden Maschinenzustände überwacht und Informationen über deren aktuellen Zustand bereitstellt. Auf diese Weise kann die Steuereinrichtung die Information beim Erzeugen des Codes berücksichtigen.

Erfindungsgemäß wird die im Code enthaltene Information an einen zentralen Server übermittelt, beispielsweise über das mobile Endgerät. Der zentrale Server wird vom Maschinenhersteller betrieben und umfasst eine entsprechende Software, über die die dem zentralen Server zugeschriebenen Schritte des Verfahrens durchgeführt werden. Insbesondere ist sowohl das mobile Endgerät beziehungsweise die auf diesem laufende Software als auch der zentrale Server beziehungsweise die auf diesem laufende Software dazu ausgebildet, miteinander zu kommunizieren, insbesondere Daten auszutauschen. Die Kommunikation zwischen dem mobilen Endgerät und dem zentralen Server kann dabei über beliebige Mobilfunkstandards realisiert sein und beliebige Kombinationen von direkter Kommunikation, Kommunikation über Cloud-Computing-Netzwerke oder Kommunikation über Satelliten und so weiter mit einschließen. Typischerweise erfolgt die Kommunikation über das Internet über einen am mobilen Endgerät verfügbaren mobilen Internetzugang. Der zentrale Server empfängt die im Code gespeicherte Information vom mobilen Endgerät und verarbeitet diese herstellerseitig. Hierzu gehört beispielsweise, dass die übermittelte Information auf Plausibilität und Sinnhaftigkeit geprüft wird, um beispielsweise Kommunikationsfehler zu vermeiden. Darüber hinaus wird geprüft, ob die betreffende Funktionsumfangserweiterung für die betroffene Maschine zur Verfügung steht und ob die Maschine die Voraussetzungen für die Funktionsumfangserweiterung erfüllt. Dies wird nachstehend noch näher im Detail erläutert.

Sind sämtliche Voraussetzungen für die gewünschte Funktionsumfangserweiterung erfüllt, sind also beispielsweise sämtliche notwendigen Hardwarekomponenten an der Maschine montiert und/oder die entsprechenden Softwarekomponenten verfügbar, so wird am zentralen Server ein Freigabecode erstellt und an das mobile Endgerät übermittelt. Der Freigabecode kann beispielsweise eine mehrstellige, beispielsweise eine 6-stellige, Nummer sein. Dieser Freigabecode wird dem Bediener am mobilen Endgerät angezeigt Die Steuereinrichtung wiederum stellt dem Bediener, insbesondere auf der Anzeigeeinrichtung, eine Eingabemaske zur Verfügung, in der er den Freigabecode eingeben und an die Steuereinrichtung der Maschine übermitteln kann. Die Eingabe kann beispielsweise über die Steuereinrichtung, beispielsweise eine Tastatur, oder die Anzeigeeinrichtung, falls diese als Touchscreen ausgebildet ist, erfolgen. Alternativ kann die Eingabe ebenfalls beispielsweise über verschiedene Tasten an einer Bedieneinrichtung, beispielsweise einem Fahrhebel oder Joystick, der Maschine erfolgen. Sofern die Ausstattung der Maschine selbst über eine optische Aufnahmeeinrichtung, beispielsweise einen Scanner oder eine Videokamera, verfügt, kann es auch vorgesehen sein, dass am mobilen Endgerät auf Grundlage der vom zentralen Server übermittelten Daten ein optoelektronisch lesbarer Code erzeugt und angezeigt wird, den der Bediener dann vor die optische Aufnahmeeinrichtung der Maschine zum Auslesen hält. Die Steuereinrichtung prüft nach der Eingabe/Erfassung anhand eines geeigneten Algorithmus, ob der Freigabecode tatsächlich vom zentralen Server des Maschinenherstellers stammt und ob der Freigabecode für die gewählte Funktionsumfangserweiterung gültig ist. Sind alle diese Voraussetzungen erfüllt, so wird die vom Bediener gewünschte Funktionsumfangserweiterung von der Steuereinrichtung an der Maschine freigeschaltet Dies bedeutet beispielsweise, dass eine gewünschte Softwarefunktion ab sofort zur Verfügung steht und genutzt werden kann. Auch kann eine neue Hardwarekomponente durch die Freischaltung aktiviert werden, sodass diese ab sofort eingesetzt werden kann. Ohne das Freischalten mit einem Freigabecode dagegen werden sowohl die gewünschten Softwarefunktionen als auch der Betrieb der gewünschten Hardwarekomponente unterbunden. Zur Sicherheit kann es darüber hinaus ebenfalls möglich sein, dass der Freigabecodes dem Benutzer alternativ telefonisch oder auf anderem Wege, beispielsweise E-Mail, übermittelt wird. Dies ist insbesondere für Notfälle vorgesehen, in denen eine direkte Datenverbindung des zentralen Servers mit dem mobilen Endgerät fehlschlägt.

Ein Vorteil der vorliegenden Erfindung liegt darin, dass die Steuereinrichtung der Maschine keine aufwendigen oder teuren Möglichkeiten zur Datenkommunikation benötigt Die Steuereinrichtung muss lediglich den Code auf der Anzeigeeinrichtung anzeigen können und in der Lage sein, einen Freigabecode entgegenzunehmen. Es besteht dagegen keine Notwendigkeit, dass die Steuereinrichtung der Maschine beispielsweise selbst über Mobilfunk mit dem zentralen Server in Kommunikation tritt. Es ist daher bevorzugt, dass die Maschine beziehungsweise die Steuereinrichtung ausschließlich über das Auslesen des optoelektronisch lesbaren Codes und das Eingeben des Freigabecodes mit den weiteren vom Verfahren umfassten Elementen, insbesondere dem mobilen Endgerät und dem zentralen Server, kommuniziert. Die Datenübermittlung an sich wird durch das mobile Endgerät übernommen, welches zwischen die Maschine und den zentralen Server gestellt wird. Dies gelingt besonders einfach dadurch, dass das mobile Endgerät bevorzugt ein vom Bediener der Maschine sowieso bei sich getragenes Smartphone ist und auf diesem lediglich eine entsprechende Software, beispielsweise die Service-App, installiert sein muss, um den Einsatz des Smartphones im erfindungsgemäßen Verfahren zu ermöglichen. Trotz einer fehlenden direkten Kommunikation zwischen dem Server und der Maschine ist es erfindungsgemäß allerdings nicht notwendig, Informationen über die Maschine indirekt über den Bediener, beispielsweise telefonisch, an den Hersteller weiterzuleiten. Die Informationen können bequem über das mobile Endgerät aus dem maschinenlesbaren Code entnommen und unmittelbar über das Internet übertragen werden. Dies stellt gleichzeitig sicher, dass die dem Bediener angezeigten Informationen über den aktuellen Vorgang nicht von der Maschine beziehungsweise der Steuereinrichtung der Maschine stammen müssen. Die Steuereinrichtung der Maschine legt lediglich fest, um welchen Vorgang es sich grundsätzlich handelt. Die Informationen zu diesem Vorgang werden dann über das Internet vom zentralen Server bezogen, so dass dem Bediener tagesaktuelle Informationen vorliegen, ohne die Notwendigkeit, beispielsweise die Software des Bordcomputers beziehungsweise der Steuereinrichtung der Maschine zu aktualisieren. Gleichzeitig wird durch das erfindungsgemäße Verfahren erreicht, dass Konfigurationsänderungen an der Maschine auch immer herstellerseitig betreut werden, wodurch sichergestellt ist, dass keinerlei Sicherheitsrisiken entstehen können. Im Gegenteil, den Herstellern wird so ermöglicht, weiterhin auf höchste Servicequalität zu setzen und dies auch selbstzu gewährleisten. Dies kann so weit gehen, dass herstellerseitig eine digitale Dokumentation von Service- und/oder Funktionsumfangsänderungen möglich ist

Der, insbesondere optoelektronisch lesbare, Code kann im Wesentlichen sämtliche Informationen enthalten, die für den Maschinenhersteller wichtig sind, um zu beurteilen, ob die Voraussetzungen an der Maschine erfüllt sind, um die gewünschte Funktionsumfangserweiterung durchzuführen beziehungsweise freizuschalten beziehungsweise zu aktivieren. So kann es bevorzugt vorgesehen sein, dass der Code wenigstens eine, bevorzugt alle, der folgenden Informationen enthält, wobei die folgende Aufstellung auch Informationen enthält, die sich im Laufe des Betriebs der Maschine ändernde Maschinenzustände beschreiben: Die Seriennummer beziehungsweise Serialnummer der Maschine, eine aktuelle Uhrzeit am Standort der Maschine, beispielsweise in Form eines Zeitstempels, insbesondere in koordinierter Weltzeit (UTC), den Standort der Maschine, beispielsweise als GPS-Koordinaten oder im Rahmen eines anderen, insbesondere globalen, Positionsbestimmungssystems, die Betriebszeit der Maschine, die Betriebszeit einer Arbeitseinrichtung der Maschine, insbesondere eines Antriebsmotors, eines Vibrationsantriebs, einer Fräswalze, einer Bohlenheizung und/oder einer Einbaubohle, die BetriebszeiteinesVerschleißteils der Maschine, insbesondere eines Luftfilters, eines Ölfilters, eines Abstreifers, eines Riemens, eines Auswerfers, einer Fahreinrichtung und/oder eines Verschleißpads, eine Identifikation des Codes, die Art der Wartung, deren Wartungsintervall abgelaufen ist, die gewünschte Funktionsumfangserweiterung, und/oder die aktuelle Maschinenkonfiguration, insbesondere Maschinenhardware und/oder Maschinensoftware. Die Identifikation des Codes beziehtsich beispielsweise darauf, dass der Code eine Information darüber enthält, zu welchem Zweck er generiertwurde, also beispielsweise aufgrund einer Funktionsumfangserweiterung oder eines abgelaufenen Wartungsintervalls. Dies dient dazu, sicherzustellen, dass sowohl am mobilen Endgerät als auch am zentralen Server softwareseitig sofort erkannt werden kann, um welchen Vorgang es sich handelt, sodass die jeweils notwendigen und korrekten Informationen angezeigt und die entsprechenden Verfahrensschritte eingeleitet werden können. Neben den genannten Einsatzzwecken können noch weitere Funktionen von ähnlichen Codes erfüllt werden, beispielsweise die Ausgabe von Fehlerinformationen oder das Auslesen von Arbeitsprotokollen. Durch die Identifikation des Codes wird sichergestellt, dass der aktuelle Vorgang richtig zugeordnet wird. Zur aktuellen Maschinenkonfiguration zählt insbesondere auch die Versionsnummer der Software des Bordcomputers beziehungsweise der Steuereinrichtung. Diese ist wichtig, damit festgestellt werden kann, welche Softwarekonfigurationen von dieser Version unterstützt werden und welche nicht Durch die Nutzung einer Prüfsumme im Code kann sichergestelltwerden, dass Fehler in der Datenübertragung, insbesondere zwischen dem mobilen Endgerät und dem zentralen Server, erkannt werden können. Auf diese Weise wird vermieden, dass Kommunikationsfehler den Ablauf des Verfahrens stören.

Eine weitere Information, die bevorzugt im Code enthalten sein kann, ist eine aktuelle Ölqualität, beispielsweise eines Hydrauliköls oder eines Motoröls. Beispielsweise kann aus der aktuellen Viskosität des Öls auf dessen Qualität zurückgeschlossen werden. Entsprechende Sensoren sind im Stand der Technik bekannt und dem Fachmann geläufig. Bevorzugt daher vorgesehen, dass ein Qualitätssensor vorhanden ist, der die Ölqualität bestimmt und an die Steuereinrichtung übermittelt Ergänzend oder alternativ zur Ölqualität können auch andere Parameter des Öls herangezogen werden, beispielsweise die Betriebsdauer einer Arbeitshydraulik und/oder ein erreichtes Temperaturminimum und/oder ein erreichtes Temperaturmaximum des Öls. Dadurch, dass auch die Ölqualität als im Code enthaltene Information an den zentralen Server übermittelt wird, kann beispielsweise ein Wartungsintervall der Maschine angepasst werden. Wird beispielsweise festgestellt, dass die Ölqualität bereits sehr schlecht ist, kann eine Wartung vorgezogen, also ein Wartungsintervall verkürzt werden. Andersherum kann ebenfalls eine Wartung aufgeschoben, also ein Wartungsintervall verlängert werden, wenn festgestellt wird, dass die Ölqualität ausreichend hoch ist. Darüber hinaus kann beispielsweise festgelegt werden, ob bei einer anstehenden Wartung ein Ölwechsel notwendig ist oder nicht. Wird also eine Wartung aus anderen Gründen als dem Ölwechsel durchgeführt, so kann anhand der aktuellen Ölqualität entschieden werden, dass ein Ölwechsel aktuell nicht notwendig ist und bis zum Ablauf des nächsten Wartungsintervalls aufgeschoben werden kann. Auch dies kann durch die Kommunikation zwischen der Steuereinrichtung und dem zentralen Server über die Informationen des Codes vermittelt werden. Dadurch, dass der zentrale Server laufend Informationen über den Betrieb der Maschine sowie den Ablauf der Wartungsintervalle und die Ölqualität enthält, kann hierdurch ebenfalls die Länge des Wartungsintervalle an die tatsächliche Ölqualität angepasst werden. Hierzu kann der Server beispielsweise Informationen von vielen unterschiedlichen Maschinen auswerten und aufgrund dieses Schwarmwissens die notwendige beziehungsweise ökonomisch und ökologisch sinnvollste Länge eines Wartungsintervalle bestimmen und einstellen. Dies kann ebenfalls dynamisch durchgeführt werden, sodass die Länge der Wartungsintervalle kontinuierlich angepasst wird

Noch eine weitere Information, die bevorzugt im Code enthalten sein kann, ist der Stand eines von der Steuereinrichtung umfassten Zählers, der beispielsweise die Anzahl der Maschinenstart zählt. Beispielsweise kann der Zähler in der Software der Steuereinrichtung integriert sein. Die Steuereinrichtung zählt und speichert also beispielsweise ab, wie oft die Maschine gestartet wurde. Dies kann sich beispielsweise auf einen Start der Steuereinrichtung selbst oder auch beispielsweise auf einen Start des Antriebsmotors der Maschine beziehen. Auch kommt hierbei beispielsweise eine Betätigung der Zündung der Maschine infrage. All diese Informationen könnten also vorliegend als Maschinenstart angesehen werden.

Wie bereits angedeutet, ist es bevorzugt vorgesehen, dass am zentralen Server und/oder am mobilen Endgerätein Überprüfen erfolgt, ob die aktuelle bzw. die am zentralen Server dokumentierte Maschinenkonfiguration, insbesondere Maschinenhardware und/oder Maschinensoftware, die gewünschte Funktionsumfangserweiterung zulässt. Wie bereits erwähnt, kann dies bezüglich der Maschinensoftware durch die Versionsnummer der Software des Bordcomputers und/oder der Steuereinrichtung erfolgen, die über den Code an das mobile Endgerät und den zentralen Server übermittelt wird. Die Konfiguration der Maschinenhardware wiederum ergibt sich entweder aus der Werkskonfiguration und einer Aneinanderreihung aller nachfolgenden Konfigurationsänderungen, beispielsweise im Rahmen von erfolgreich durchgeführten Funktionsumfangserweiterungen. Ergänzend oder alternativ ist es auch möglich, dass die aktuelle Konfiguration der Maschine detektierbar ist bzw. vor der Erzeugung des optoelektronisch lesbaren Codes zumindest teilweise von der Maschine bzw. der Steuereinrichtung abgefragt wird, beispielsweise, indem Hardwarekomponenten, die an die Maschine an- oder von dieser abgebaut werden, von der Steuereinrichtung und/oder dem Bordcomputer erkennbar sind und auf Vorhandensein und/oder Funktionsintegrität abgeprüft werden. Hierfür können beispielsweise Sensoren eingesetzt werden, die eine montierte Hardwarekomponente beispielsweise anhand der Montagepositionen erkennt, beispielsweise durch das Schlüssel-Schloss-Prinzip. Darüber hinaus könnten Hardwarekomponenten auch über Identifikationseinrichtungen, beispielsweise RFID-Chips, detektiert beziehungsweise erkannt werden. Eine weitere Möglichkeit besteht darin, Kabelbrücken zu detektieren. So kann beispielsweise festgestellt werden, wenn an einem Steuerungseingang ein Signal gemessen wird, woran erkennbar ist, ob beispielsweise ein Stecker gesteckt, ein Ventil oder ein Sensor verbunden wurde. Auf diese Weise kann die HardwareKonfiguration der Maschine automatisch erfasst werden. Alternativ ist es allerdings auch möglich, Konfigurationsänderungen der Hardware-Komponenten der Maschine vom Bediener beispielsweise am Bordcomputer und/oder der Steuereinrichtung eintragen zu lassen. Die Maschinenkonfiguration wird dann zumindest teilweise anhand der vom Bediener angegebenen Komponenten erstellt. Auch Kombinationen dieser Vorgehensalternativen sind möglich, sodass einzelne Hardware-Komponenten automatisch erkannt werden, andere allerdings vom Bediener angegeben werden. Anhand der im optoelektronisch lesbaren Code angegebenen Maschinenkonfiguration erfolgt dann also eine Überprüfung, ob die Voraussetzungen für die gewünschte Funktionsumfangserweiterung erfüllt sind oder nicht. Dieses Überprüfen kann insbesondere bereits maschinenseitig mittels der Steuereinrichtung erfolgen. Insbesondere werden die weiteren Schritte des Verfahrens nur dann ausgeführt, wenn die Voraussetzungen erfüllt sind. Falls die Voraussetzungen nicht erfüllt sein sollten, so wird dem Bediener, insbesondere an der maschinenseitigen Anzeigeeinrichtung direkt und/oder durch Erzeugen eines entsprechenden optoelektronischen Codes an der Maschine und Auslesen durch das mobile Endgerät am mobilen Endgerät, eine entsprechende Informationsmitteilung angezeigt, die gleichzeitig bevorzugt Informationen darüber enthält, welche Voraussetzungen konkret nicht erfüllt sind und/oder welche Schritte für den Bediener notwendig sind, diese Voraussetzungen zu erfüllen. Hierbei kann es sich beispielsweise um eine konkrete Handlungsanweisung handeln, beispielsweise mit Arbeitsschritten, die an der Maschine selbst erledigt werden müssen. Auf der anderen Seite kann es sich hierbei allerdings beispielsweise auch um Kontaktdaten zu einem Servicepartner des Maschinenherstellers handeln, der die entsprechenden Arbeiten erledigen kann, um die Voraussetzungen für die Funktionsumfangserweiterung zu erfüllen. Hierbei kann ebenfalls der Standort der Maschine herangezogen werden, um einen Servicepartner auszuwählen, der sich möglichst nah am aktuellen Standort der Maschine befindet.

Das erfindungsgemäße Verfahren eignet sich besonders gut dafür, den gesamten Ablauf bei einer Funktionsumfangserweiterung individuell auf die vorliegenden Umstände und die beteiligten Personen zuzuschneiden. Hierbei ist es hilfreich, wenn das mobile Endgerät einer Gruppe von Personen oder im besten Fall einer einzelnen Person zugeordnet werden kann. Auch dies ist beispielsweise der Fall, wenn der Bediener der Maschine sein eigenes Smartphone als mobiles Endgerät nutzt. In diesem Fall kann der Bediener sich gegenüber der Software auf dem mobilen Endgerät identifizieren und/oder authentifizieren. Auf diese Weise kann dann beispielsweise festgelegt werden, zu welchen Funktionsumfangserweiterungen oder weiteren Funktionen des mobilen Endgerätes der Bediener berechtigterweise Zugang erhält. So kann es beispielsweise vorgesehen sein, dass am zentralen Server und/oder am mobilen Endgerät eine hierarchische Struktur mit mindestens zwei Serviceleveln hinterlegt ist, wobei dem Benutzer des mobilen Endgeräts ein Servicelevel zugewiesen ist, und wobei das mobile Endgerät dem Benutzer nach dem Lesen des Codes je nach seinem Servicelevel unterschiedliche Informationen anzeigt Selbstverständlich können auch mehr als zwei Servicelevel eingesetzt werden, beispielsweise 3, 4, 5, 6, 7, 8, 9, 10 oder noch mehr unterschiedliche Servicelevel, denen die Benutzer zugeordnet sein können. Bevorzugt sind beispielsweise 5 Servicelevel. Beispielsweise istes möglich, zwischen reinen Maschinenbedienern und geschulten Servicetechnikern zu unterscheiden. Grundsätzlich können sämtliche der genannten Personen den optoelektronisch lesbaren Code mit ihrem mobilen Endgerät auslesen. Je nachdem, welchen Servicelevel die jeweilige Person innehat, kann ihr dann allerdings ein anderer Informationsgehalt angezeigt werden. So können einem Servicetechniker, dessen Servicelevel ausreichend hoch ist, beispielsweise Informationen und Handlungsanweisungen zur Verfügung gestellt werden, wie er zur Durchführung der Funktionsumfangserweiterung vorgehen muss. Hierbei kann es sich beispielsweise um konkrete Montageanweisungen für Arbeiten an der Maschine selbst handeln. Einem reinen Maschinenbediener beispielsweise, der den entsprechenden Servicelevel nicht innehat, können Informationen dazu angezeigt werden, wie er einen Servicetechniker mit einem entsprechend ausreichend hohen Servicelevel erreichen kann.

Der Einsatz derartiger hierarchischer Servicelevel-Strukturen kann auch dazu genutzt werden, um die Sicherheit zu erhöhen. So können die hinsichtlich der zugelassenen Informationen umfangreicheren Servicelevel als unterschiedliche Berechtigungen angesehen werden, die beispielsweise nur geschultem Personal erteilt werden, bei dem davon auszugehen ist, dass die notwendigen Arbeiten unter Einhaltung sämtlicher Sicherheitsvorkehrungen ausgeführt werden. Um sicherzustellen, dass sicherheitsrelevante Arbeiten nur von hierfür zugelassenem Personal durchgeführt werden, ist bevorzugt vorgesehen, dass am zentralen Server oder am mobilen Endgerät ein Überprüfen des Servicelevels des Benutzers des mobilen Endgerät durchgeführt wird und die weiteren Schritte, insbesondere das Übermitteln des Freigabecodes vom Server an das mobile Endgerät, nur durchgeführt werden, wenn das Servicelevel des Benutzers ausreicht Dadurch, dass der Freigabecode nur dann an das mobile Endgerätgeschicktwird, wenn der Servicelevel des Bedieners ausreicht, wird ausgeschlossen, dass ein hierzu sicherheitstechnisch nicht befugter Bediener eine Funktion oder Konfiguration der Maschine einfach so in Betrieb nimmt. Hierdurch wird die Betriebssicherheit der Maschine verbessert. Ergänzend oder alternativ kann vorgesehen sein, dass das Servicelevel des Bedieners ebenfalls in die Erstellung des Freigabecodes einfließt, derart, dass die Steuereinrichtung der Maschine aus dem Freigabecode auslesen kann, welchen Servicelevel der den Code eingebenden Bediener hat. Der Servicelevel des Bedieners ist mit anderen Worten im Freigabecode enthalten. Auch dies dient der zusätzlichen Sicherheit, da auf diese Weise auch die letzte Instanz, konkret die Steuereinrichtung, nochmals überprüfen kann, ob tatsächlich der benötigte Servicelevel für die angestrebte Funktionsumfangserweiterung oder des bearbeiteten Wartungsintervalls vorliegt. Entspricht der Servicelevel des Bedieners aus dem Freigabecodes nicht dem notwendigen Servicelevel für den aktuell angestrebten Vorgang, so kann die Steuereinrichtung die Annahme des Freigabecodes verweigern. In diesem Fall werden dem Bediener bevorzugtdiejenigen Informationen angezeigt, die bei unzureichendem Servicelevel vorgesehen sind. Dies kann direkt auf der Steuereinrichtung erfolgen oder dadurch, dass die Steuereinrichtung einen neuen Code erstellt, der vom Bediener mit dem mobilen Endgerät ausgelesen werden kann.

Grundsätzlich kann es sich beim Servicelevel des Bedieners ebenfalls um einen dynamischen Wert handeln. Beispielsweise kann der Servicelevel eines Bedieners erhöht werden, er also in ein anderes Servicelevel eingestuft werden, wenn er beispielsweise eine Schulung erfolgreich abschließt. Auch das Herunterstufen eines Servicelevels ist möglich. Beispielsweise kann ein Bediener regelmäßig stattfindende Schulungen besuchen, um sein Servicelevel zu erhalten. Dies kann notwendig sein, da verschiedene Details sich turnusmäßig ändern oder erweitern können, so dass sichergestellt werden muss, dass der Bediener mit einem entsprechenden Servicelevel auch tatsächlich auf dem aktuellen Stand ist. Sollte ein Bediener eine entsprechende Schulung verpassen, so kann sein Servicelevel herabgestuft werden. Schließlich ist es ergänzend oder alternativ ebenfalls möglich, dass ein Servicelevel temporär hochgestuft wird. Dies ist insbesondere in einem Notfall hilfreich. Wenn es beispielsweise nur möglich ist, eine Wartung mit einem höheren Servicelevel durchzuführen, als ein Bediener vor Ort hat, so kann dieser Bediener durch eine persönliche Anleitung, beispielsweise telefonisch oder auf anderem Wege, aus der Ferne durch die Wartung geführt werden. Für diesen Fall kann das Servicelevel des Bedieners temporär hochgestuftwerden, damit er die Wartung durch die Eingabe des Freigabecodes an der Steuereinrichtung auch erfolgreich abschließen kann.

Das erfindungsgemäße Verfahren eignet sich dafür, dass der Bediener der Maschine sich jederzeit die von ihm gewünschte Maschinenkonfiguration aus sämtlichen möglichen Optionen zusammenstellen kann. So muss der Bediener eine gewünschte Funktionsumfangserweiterung nicht auf einem anderen Wege als dem erfindungsgemäßen Verfahren beim Maschinenhersteller melden oder sich beispielsweise per Telefon erkundigen. Der Bediener wählt lediglich die von ihm gewünschte Funktionsumfangserweiterung aus, beispielsweise über die Steuereinrichtung oder den Bordcomputer. Über den Code liest er die Informationen zur gewünschten Funktionsumfangserweiterung von der Maschine auf das mobile Endgerät aus. Es ist sodann bevorzugt vorgesehen, dass am mobilen Endgerät ein Erstellen eines Auftrags für eine Funktionsumfangserweiterung, konkret diejenige, die vom Bediener ausgewählt wurde, erfolgt und an den zentralen Server übermittelt wird. Handelt es sich um eine zahlungspflichtige Funktionsumfangserweiterung, so kann bevorzugt ebenfalls vorgesehen sein, dass der zentrale Server ein Übermitteln einer Zahlungsanforderung an das mobile Endgerät durchführt. Im Rahmen des erfindungsgemäßen Verfahrens kann daher sowohl eine Auftragserstellung als auch eine Zahlungsabwicklung für zahlungspflichtige Funktionsumfangserweiterungen vorgesehen sein. Die Zahlung kann beispielsweise direkt vom mobilen Endgerät aus mittels Online-Bezahldiensten durchgeführt werden. Der zentrale Server und die Software des mobilen Endgerätes bilden daher insgesamt einen Onlineshop für die Funktionsumfangserweiterungen. Besonders bevorzugt ist es, dass am zentralen Server oder am mobilen Endgerät ein Überprüfen eines Zahlungseingangs erfolgt und die weiteren Schritte, insbesondere das Übermitteln des Freigabecodes vom Server an das mobile Endgerät, nur durchgeführt werden, wenn ein Zahlungseingang festgestellt wurde. Auf diese Weise ist sichergestellt, dass nur bezahlte Funktionsumfangserweiterungen auch tatsächlich in Betrieb genommen werden können. Alternativ kann auch ein klassischer Rechnungsstellungsprozess angestoßen werden.

Bei dem Freigabecode kann es sich um einen zumindest teilweise zufällig generierten Zahlencode handeln. Das Erstellen des Freigabecodes erfolgt am zentralen Server oder am mobilen Endgerät. Der Generierung des Freigabecodes liegt ein Algorithmus zugrunde, der sicherstellt, dass die Steuereinrichtung der Maschine aus dem Freigabecode heraus nachvollziehen kann, dass dieser tatsächlich vom zentralen Server stammt und für den aktuellen Freigabevorgang vorgesehen ist. Insbesondere werden daher verschiedene Informationen, wie beispielsweise die Seriennummer der Maschine und/oder der Zeitpunkt der Erstellung des Freigabecodes und/oder die Art des aktuellen Vorganges, bei der Erstellung des Freigabecodes berücksichtigt, derart, dass sie anhand des Freigabecodes für die Steuereinrichtung nachvollziehbar sind. So ist es beispielsweise bevorzugt, dass der Freigabecode derart erstellt wird, dass er nur für die betreffende Maschine und/oder nur für einen begrenzten Zeitraum gültig ist. Auf diese Weise kann sichergestellt werden, dass nicht mit ein und demselben Freigabecode unterschiedliche Funktionsumfangserweiterungen oder die gleiche Funktionsumfangserweiterung bei unterschiedlichen Maschinen, freigeschaltet wird. Durch die Beschränkung der Gültigkeit auf einen begrenzten Zeitraum wird weiterer Missbrauch vermieden.

Wie vorstehend beschrieben, kann durch das Freischalten der Funktionsumfangserweiterung die neue Funktion oder die neue Hardware in Betrieb genommen werden. Wie bereits dargestellt, eignet sich das erfindungsgemäße Verfahren auch zum Vertrieb von Maschinenoptionen. Neu gekaufte Optionen werden dabei freigeschaltet und dem Bediener dauerhaft zur Verfügung gestellt. Das Freischalten der Funktionsumfangserweiterung gilt zeitlich unbegrenzt. Das erfindungsgemäße Verfahren kann allerdings auch dazu eingesetzt werden, Funktionsumfangserweiterungen der Maschine nicht nur zu verkaufen, sondern gegebenenfalls zu vermieten. Hierfür kann vorgesehen sein, dass das Freischalten der Funktionsumfangserweiterung zeitlich begrenzt gilt. Der Zeitraum, für den das Freischalten gelten soll, kann vom Bediener beispielsweise an der Steuereinrichtung ausgewählt werden und wird insbesondere ebenfalls in die Informationen im optoelektronisch lesbaren Code aufgenommen. Auf diese Weise kann eine zeitliche Begrenzung in den nachfolgenden Verfahrensschritten, beispielsweise bei der Auftragserstellung und der Abrechnung, Berücksichtigung finden. Ergänzend oder alternativ kann auch der Freigabecode zeitlich unbegrenzt oder zeitlich begrenzt gültig sein. Ein zeitlich abgelaufener Freigabecode wird von der Steuereinrichtung nicht akzeptiert. Ein zeitlich begrenzter Freigabecode stellt sicher, dass dieser auch tatsächlich nur für denjenigen Vorgang verwendet wird, für den er vorgesehen war, wodurch die Sicherheit des Verfahrens erhöht wird.

Das erfindungsgemäße Verfahren kann eine Reihe von Überprüfungen umfassen. Beispielsweise kann die Kommunikation zwischen dem mobilen Endgerät und dem Server überprüft werden. Darüber kann überprüft werden, ob die Maschine die Voraussetzungen für eine gewünschte Funkionsumfangserweiterung erfülltetc. Bei jeder dieser Überprüfungen kann ein negatives Ergebnis erreicht werden. Das Ziel des Verfahrens ist es allerdings, den Bediener darin zu unterstützen, ihm die gewünschte Funktionsumfangserweiterung zur Verfügung zu stellen. Damit ein negatives Ergebnis einer der Vielzahl der Überprüfungen nichtzu einem kommentarlosen Abbruch des Verfahrens führt, ist es bevorzugt vorgesehen, dass dem Bediener am mobilen Endgerät bei einem negativen Ergebnis einer Überprüfung eine Informationsausgabe angezeigt wird, insbesondere mit einer Anleitung zur Problembehebung und/oder einem Kontakt zu einem Servicepartner. Auch bei einem negativen Ergebnis einer Überprüfung soll daher in konstruktiver Weise ein Ausweg beziehungsweise eine Lösung für das zugrunde liegende Problem aufgezeigt werden. Im schlimmsten Fall liegt diese Lösung im Hinweis, dass ein Servicepartner kontaktiert werden muss. Wie bereits erläutert, handeltes sich hierbei bevorzugt um einen Servicepartner, der sich in der Nähe der Maschine befindet. Selbst dann wird allerdings hierdurch dem Bediener ein Weg aufgezeigt, wie er an die gewünschte Funktionsumfangserweiterung kommen kann.

Es soll dem Bediener ermöglicht werden, über das erfindungsgemäße Verfahren erleichtert Zugriff auf sämtliche für seine Maschine verfügbaren optionalen Funktionsumfangserweiterungen zu erhalten. Hierfür kann es beispielsweise vorgesehen sein, dass eine Liste mehrerer oder aller möglichen Funktionsumfangserweiterungen in der Steuereinrichtung hinterlegt ist und der Bediener eine gewünschte Funktionsumfangserweiterung aus dieser Liste auswählt. Das erfindungsgemäße Verfahren wird dann unter Bezugnahme auf diese gewählte Funktionsumfangserweiterung durchgeführt. Ergänzend oder alternativ ist es ebenfalls möglich, dass die Steuereinrichtung dem Bediener während der Bedienung der Maschine Vorschläge zu verfügbaren Funktionsumfangserweiterungen aktuell benutzter Funktionen und/oder aktuell freigeschalteter Funktionsumfangserweiterungen der Maschine macht, die vom Bediener auswählbar sind. Der Bediener bedient also in üblicher Weise die Maschine. Während er bestimmte Funktionen oder Arbeitseinrichtungen der Maschine bedient, kann auf der Steuereinrichtung ein Hinweis angezeigt werden, dass für die aktuelle Funktion oder die aktuelle Arbeitseinrichtung Optionen beziehungsweise Funktionsumfangserweiterungen verfügbar sind. Darüber hinaus können dem Bediener, wenn dieser eine Funktionsumfangserweiterung freischaltet, beispielsweise über das erfindungsgemäße Verfahren, weitere verfügbare Funktionsumfangserweiterungen angezeigtwerden. Hierbei handeltessich insbesondere um Funktionsumfangserweiterungen, die für den Nutzer interessant sein könnten. Hierfür werden am zentralen Server beispielsweise die Daten anderer Maschinen oder anderer Nutzer herangezogen. Beispielsweise werden Funktionsumfangserweiterungen angezeigt, die von anderen Nutzern mit ähnlich konfigurierten Maschinen ebenfalls freigeschaltet wurden. Ergänzend oder alternativ können auch Funktionsumfangserweiterungen vorgeschlagen werden, die zur aktuell freigeschalteten Funktionsumfangserweiterung passen. Hat der Kunde beispielsweise gerade ein Kantenschneidrad freigeschaltet, kann die Steuereinrichtung einen Vorschlag über Varianten weiterer Kantenschneidräder anzeigen. Die verfügbaren Funktionsumfangserweiterungen können auch direkt angezeigt werden. Wählt der Bediener eine dieser Funktionsumfangserweiterungen aus, so wird das erfindungsgemäße Verfahren unter Bezugnahme auf diese gewählte Funktionsumfangserweiterung durchgeführt

Wie bereits erläutert, kann eine erfindungsgemäße Funktionsumfangserweiterung eine reine Softwareänderung, eine reine Hardwareänderung oder eine Hardwareänderung in Verbindung mit einer Softwareänderung umfassen. Insbesondere kann die Funktionsumfangserweiterung wenigstens eine der folgenden Funktionen betreffen: Kantenschneidgerät rechts und/oder links (zum Anbau an Walzen, wird zur Herstellung von sauberen Kanten an Asphaltschichten eingesetzt), schnellere oder langsamere Hundegangverstellung (bezieht sich auf einen Fahrmodus von Tandemwalzen und kann allein über eine Softwareänderung erreicht werden), Splittstreuer, Kreiselsplittstreuer (zum Anbau an Walzen), Schnittstelle Messtechnik (über die Schnittstelle können verschiedene Messgeräte mitjeweils eigenem Verwendungszweck mit der Steuereinrichtung verbunden werden), Hinderniserkennung (in Verbindung mit beispielsweise Kameras oder anderen Sensoren), Wegfahrsperre (beispielsweise über eine PIN-Eingabe am Bordcomputer erreichbar und in diesem Fall eine reine Softwareänderung), Funkfernsteuerung (benötigt Soft- und Hardware), Telematik (je nach Anwendung eine reine Softwareänderung oder mit Hardware verbunden), elektrische Sitzverstellung (benötigt Soft- und Hardware), Tastenbelegung Fahrhebel (reine Softwareänderung), Freilauf Mengenteiler aktivieren, Mengenteilerautomatik aktivieren (Mengenteiler erhöhen die Traktion von hydraulischen Fahreinrichtungen; kann eine reine Softwareänderung sein oder zusätzliche Hardware benötigen), Fahrhebel Rampeneinstellung (reine Softwareänderung, die eine Abfolge verschiedener Steuerbefehle in speziellen Arbeitssituationen auslöst), Tippbetrieb (ein Knopfdruck löst mehrere Fahrbefehle nacheinander aus; kann eine reine Softwareänderung sein oder zusätzliche Hardware benötigen), Rundumkennleuchte (zum Anbau an alle Maschinen), Coming / Leaving Home (verschiedene Funktionen werden automatisch bei Betriebsbeginn oder Betriebsende aktiviert; kann eine reine Softwareänderung sein oder zusätzliche Hardware benötigen), Reifendruckregelanlage (benötigt Soft- und Hardware), ECO Stop (reine Softwareänderung, bei der der Motor zur Einsparung von Kraftstoff nach dem Ablauf einer gewissen Zeit im Leerlauf ausgeschaltet wird), Verdichtungsüberwachung (kann eine reine Softwareänderung sein oder zusätzliche Hardware, beispielsweise Sensoren, benötigen), Anzeigemodi Verdichtungskontrolle (reine Softwareänderung), elektrische Spiegelverstellung (benötigt Soft- und Hardware), Rückfahrkamera (benötigt Soft- und Hardware), Birdview (Anzeigemodus, bei dem ein Blick aus der Vogelperspektive auf die Maschine aus mehreren Kamerabildern rund um die Maschine erstellt wird; benötigt Soft- und Hardware), Drohnenkamera (benötigt Soft- und Hardware), virtual / augmented Reality (benötigt Soft- und Hardware), Asphalttemperatursensor (benötigt Soft- und Hardware), geteiltes Abstreiferschild (benötigt Soft- und Hardware), AdBlue Befüllpumpe (benötigt Soft- und Hardware), Staubabsaugung (benötigt Soft- und Hardware), Seitenschildkamera (benötigt Soft- und Hardware), Aktivierung der Fräswalze bei Rückwärtsfahrt (reine Softwareänderung), Druckluftsystem (benötigt Soft- und Hardware), Maschinenautonomie oder - teilautonomie wie Steuerautomatik, automatisches Folgen, automatisches Kantenandrücken, Nivellierautomatik (benötigt Soft- und Hardware).

Im Zuge des Verfahrens wird eine ganze Reihe von maschinenspezifischen Informationen an den zentralen Server übermittelt, insbesondere sämtliche hierin genannten Informationen. Diese werden vom zentralen Server dokumentiert und/oder analysiert. Die gesammelten Daten dienen der Flotten-, Auslastungs- und Qualitätsauswertung. Um die Servicequalität des Maschinenherstellers gegenüber dem Bediener zu verbessern, können diese Informationen eingesetzt werden, um den Service des Herstellers individuell auf die Maschine beziehungsweise deren aktuelle Konfiguration zuzuschneiden. Es ist daher bevorzugt vorgesehen, dass am zentralen Server aus den übermittelten, im Code enthaltenen Informationen, und insbesondere auch den freigeschalteten Wartungsintervallen und/oder Funktionsumfangserweiterungen, eine Maschinenhistorie erstellt und gespeichert wird. Auf diese Weise wird ein digitales Serviceheft oder Checkheft für die Maschine erstellt, aus dem die aktuelle Konfiguration der Maschine und deren vergangene Konfigurationsänderungen hervorgehen. Auf diese Weise kann beispielsweise sichergestellt werden, dass ein Servicepartner immer die passenden Ersatzteile und Werkzeuge für Wartungs- und Servicearbeiten an der Maschine bei einem Baustellenbesuch mitführt.

Neben der Freischaltung von Funktionsumfangserweiterungen bezieht sich das erfindungsgemäße Verfahren ebenfalls auf das Freischalten von Wartungsintervallen. Das erfindungsgemäße Verfahren in Bezug auf den Ablauf von Wartungsintervallen und deren Freischalten beziehungsweise Quittieren ist als Ergänzung oder als Alternative zum Verfahren bezüglich dem Freischalten von Funktionsumfangserweiterungen zu sehen und kann auch unabhängig von diesem beansprucht werden. Gleichzeitig gelten die Verfahrensschritte, die Merkmale, Vorteile und Wirkungen des Verfahrens bezüglich der Funktionsumfangserweiterungen im übertragenen Sinn ebenfalls für das Verfahren bezüglich der Wartungsintervalle und umgekehrt.

Wie bereits erläutert, kann das Anzeigen eines optoelektronisch lesbaren Codes auf der Anzeigeeinrichtung der Steuereinrichtung auch selbsttätig durch die Steuereinrichtung nach dem Ablauf eines Wartungsintervalls erfolgen. Beispielsweise wird dann ein Hinweis angezeigt, dass das entsprechende Wartungsintervall abgelaufen und welche Wartung notwendig ist. Auch hier wird der Code mit dem mobilen Endgerät ausgelesen und, insbesondere in Abhängigkeit vom Servicelevel des Bedieners, Informationen zur Wartung bereitgestellt. Wie vorstehend bereits beschrieben, können diese Informationen beispielsweise eine Handlungsanweisung für die Wartung selbst umfassen, wenn das Servicelevel des Bedieners ausreichend hoch ist, oder Informationen über einen Servicepartner umfassen, der die Wartung durchführen kann. Entweder der Bediener oder ein Servicepartner führt dann die Wartung durch. Das am Ende des erfindungsgemäßen Verfahrens erfolgende Freischalten des Wartungsintervalls bedeutet, dass das abgelaufene Wartungsintervall quittiert wird. Der Bediener, der den Freigabecode für das Wartungsintervall angefordert hat und diesen an der Steuereinrichtung eingeht, steht mit seinem Namen dafür, dass die Wartung vollständig und richtig durchgeführt wurde.

Ergänzend oder alternativ kann vorgesehen sein, dass die tatsächliche Durchführung der Wartung genauer überwacht wird. Dies ist beispielsweise dann möglich, wenn Sensoren an der Maschine verfügbar sind, die in der Lage sind, die Wartung nachzuvollziehen. Beispielsweise können Verschleißteile, die ausgetauscht werden müssen, mit einer Identifizierungseinrichtung, beispielsweise einem RFID-Chip, ausgestattet sein, sodass die Steuereinrichtung den Austausch der Verschleißteile nachvollziehen kann. In diesem Fall umfasst der optoelektronisch lesbare Code ebenfalls Informationen darüber, ob die Wartung bereits durchgeführt wurde oder nicht Diese werden dann ebenfalls an den zentralen Server übertragen. Bevorzug ist es vorgesehen, dass ein Durchführen von Wartungsarbeiten an der Maschine erforderlich ist, bevor der Freigabecode übermittelt wird. Um dies nachvollziehbar zu machen, kann es vorgesehen sein, dass sowohl vor als auch nach der durchgeführten Wartung ein optoelektronisch lesbarer Code von der Steuereinrichtung generiert wird, wobei der Code nach der Wartung die Information enthält, dass die Wartung erfolgreich durchgeführt wurde. Nachdem die in diesem Code enthaltenen Informationen an den zentralen Server übertragen wurden, fährt dieser mit den weiteren Schritten des Verfahrens fort, insbesondere mit dem Erstellen und dem Übersenden des Freigabecodes an das mobile Endgerät. Auf diese Weise kann sichergestellt werden, dass Wartungen korrekt und nur von ausreichend geschultem Personal durchgeführt werden.

Die Erfindung erstreckt sich ebenfalls auf ein Funktions- oder Wartungsmanagementsystem, das zur Durchführung der vorstehend beschriebenen Verfahren ausgebildet ist. Hierfür umfasst das Funktions- oder Wartungsmanagementsystem eine selbstfahrende Maschine, besonders Straßenbaumaschine, insbesondere Tandemwalze, Walzenzug, Gummiradwalze, Müllverdichter, Straßenfertiger, Straßenfräse, Recycler oder Stabilisierer, mit einer Steuereinrichtung und einer Anzeigeeinrichtung, ein mobiles Endgerät, insbesondre umfassend eine Einrichtung zum Erfassen eines auf der Anzeigeeinrichtung dargestellten, optoelektronisch lesbaren Codes, und einen zentralen Server. Sämtliche vorstehend für die erfindungsgemäßen Verfahren beschriebenen Merkmale, Vorteile und Wirkungen gelten im übertragenen Sinne ebenso für das erfindungsgemäße Funktions- oder Wartungsmanagement system.

Die Erfindung wird nachstehend anhand der in den Figuren gezeigten Ausführungsbeispiele näher erläutert. Es zeigen schematisch:
- Figur 1:: eine Tandemwalze;
- Figur 2:: einen Walzenzug;
- Figur 3:: eine Gummiradwalze;
- Figur 4:: einen Müllverdichter;
- Figur 5:: einen Straßenfertiger;
- Figur 6:: eine Straßenfräse;
- Figur 7:: ein Funktions- oder Wartungsmanagementsystem;
- Figur 8:: eine Steuereinrichtung mit einer Anzeigeeinrichtung;
- Figur 9:: eine Steuereinrichtung mit einer Anzeigeeinrichtung sowie den funktionellen Zusammenhang mit einem mobilen Endgerät und einem zentralen Server;
- Figur 10:: ein Ablaufdiagramm des Verfahrens zur Funktionsumfangserweiterung;
- Figur 11:: ein Ablaufdiagramm des Verfahrens zur Wartung; und
- Figur 12:: ein Ablaufdiagramm eines alternativen Verfahrens zur Wartung.

Gleiche beziehungsweise gleich wirkende Bauteile sind mit den gleichen Bezugszeichen beziffert. Sich wiederholende Bauteile sind nicht in jeder Figur gesondert bezeichnet

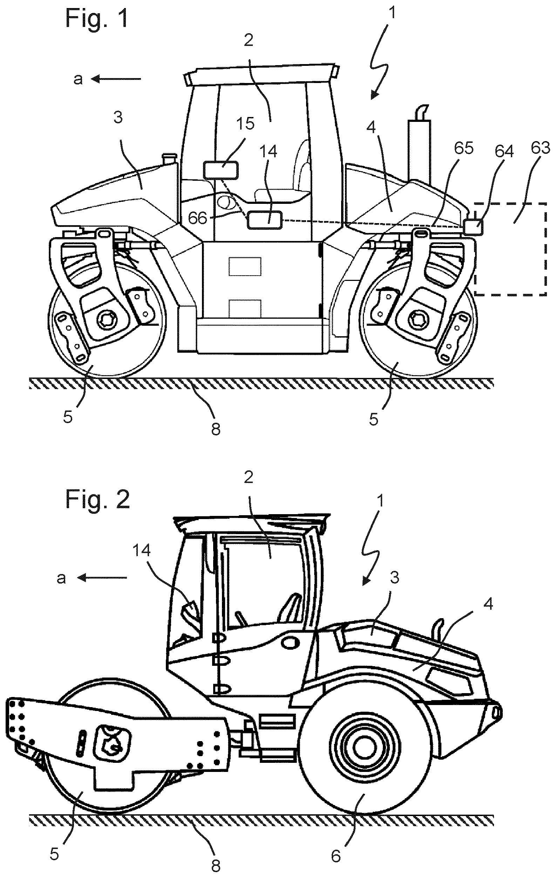

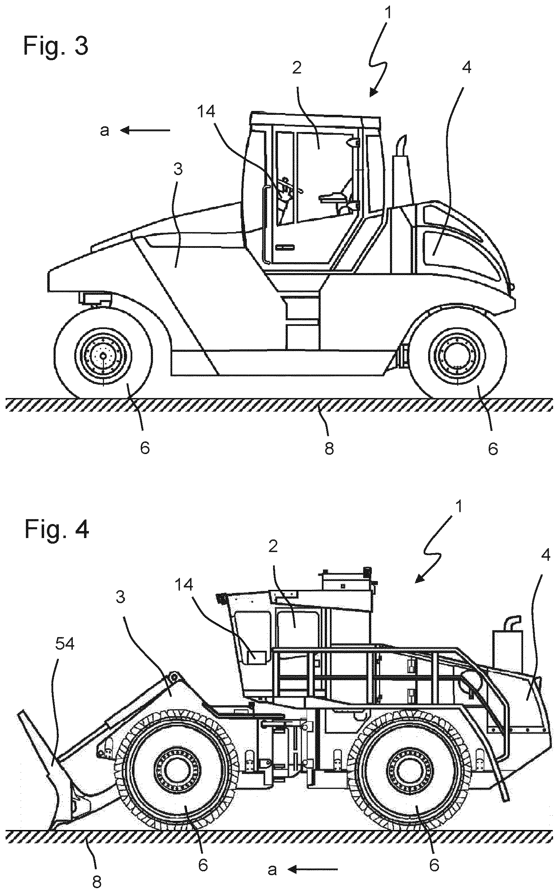

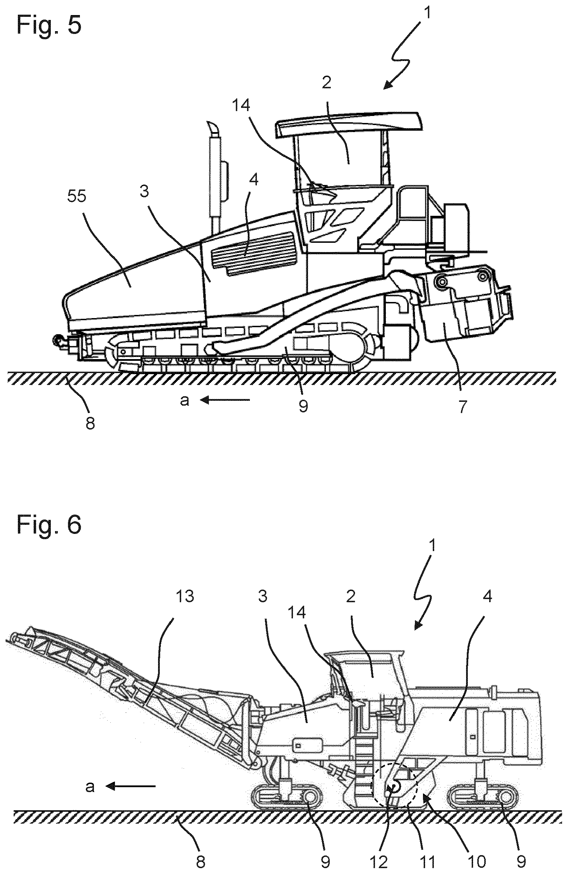

Die Figuren 1-6 zeigen gattungsgemäße Maschinen 1. Sämtliche gattungsgemäße Maschinen 1 sind selbstfahrend und umfassen einen Maschinenrahmen 3, eine Fahrerkabine 2 und einen Antriebsmotor 4, typischerweise einen Dieselverbrennungsmotor oder einen Elektromotor. Im Arbeitsbetrieb bewegen sie sich typischerweise in Arbeitsrichtung a auf einem Boden 8. Hierfür weisen sie unterschiedliche Fahreinrichtungen auf, die mit der jeweiligen Funktion oder dem Einsatzgebiet zusammenhängen. In Figur 1 ist beispielsweise eine Tandemwalze dargestellt, die sowohl vorne als auch hinten jeweils eine Walzbandage 5 aufweist, mit denen sie den Boden 8 verdichtet. In den Walzbandagen 5 kann zusätzlich beispielsweise ein Vibrationserreger vorgesehen sein, über den die Walzbandage 5 in Schwingungen versetztwerden kann, um die Verdichtungsleistung der Maschine 1 zu erhöhen. Figur 2 zeigt einen Walzenzug, der in Arbeitsrichtung a vorne ebenfalls eine Walzbandage 5 aufweist. Hinten weist der Walzenzug dagegen Räder 6 auf. Die in Figur 3 dargestellte Gummiradwalze weist sowohl vorne als auch hinten Gummiräder 6 auf. In Figur 4 wiederum ist ein Müllverdichter dargestellt. Dieser weist an seinem in Arbeitsrichtung a vorderen Ende einen Verdichterschild 54 auf, mit dem Müll auf Deponien verteilt werden kann. Figur 5 zeigt einen Straßenfertiger zum Einbau von Asphaltschichten. Hierfür weist dieser einen Materialbunker 55 und eine Einbaubohle 7 auf. Der gezeigte Straßenfertiger umfasst Kettenlaufwerke 9, könnte allerdings ebenfalls Räder 6 aufweisen. In Figur 6 ist schließlich eine Straßenfräse gezeigt, wobei auch andere Bodenfräsmaschinen wie Recycler und Stabilisierer umfasst sind. Die Straßenfräse umfasst eine in einem Fräswalzenkasten 10 um eine Rotationsachse 12 rotierbar gelagerte Fräswalze 11, die dazu genutzt wird, beispielsweise beschädigte Straßen abzufräsen. Das abgetragene Fräsgut wird über eine Fördereinrichtung 13 auf ein Transportfahrzeug überladen und abtransportiert. Diese Maschinentypen sind dem Fachmann geläufig, sodass auf deren Aufbau und Funktion nicht näher eingegangen wird.

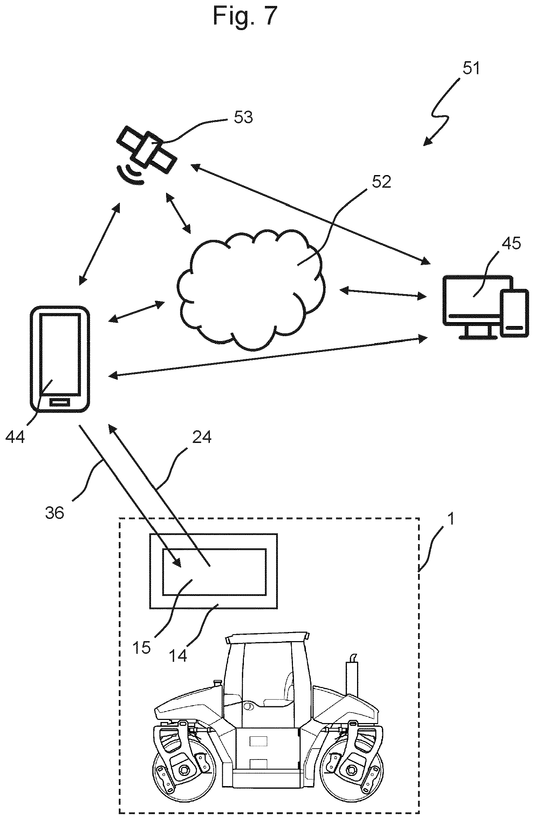

Sämtliche Maschinen 1 weisen eine Steuereinrichtung 14 mit einer Anzeigeeinrichtung 15 (siehe Figuren 7-9) auf. Die Steuereinrichtung 14 ist beispielsweise Teil des Bordcomputers der Maschinen 1. Figur 7 zeigt einen Überblick über ein zur Durchführung des Verfahrens ausgebildetes Funktions- oder Wartungsmanagementsystem 51. Das System 51 umfasst eine Maschine 1, ein mobiles Endgerät 44 und einen zentralen Server 45. Das mobile Endgerät 44 steht, zumindest zeitweise, mit dem zentralen Server 45 in Kontakt und kann mit diesem Daten austauschen, beispielsweise über das Internet, eine Cloud 52, einen Satelliten 53 oder beliebige andere Varianten der, bevorzugt kabellosen, Datenfernübertragung. Das mobile Endgerät 44 ist beispielsweise als Smartphone oder Tablet ausgebildet und umfasst eine Kamera, mit der optoelektronisch lesbare Codes von der Anzeigeeinrichtung 15 der Maschine 1 abgelesen werden können. Während das mobile Endgerät44 und beispielsweise die Cloud 52, der Satellit 53 und der Server 45 beispielsweise über eine Internetverbindung in ständigem Datenaustausch stehen, istzur Übertragung von Daten zwischen der Maschine 1 und dem mobilen Endgerät 44 lediglich ein Lesen 24 einesauf der Anzeigeeinrichtungen 15 dargestellten optoelektronisch lesbaren Codes und ein Eingeben 36 eines auf dem mobilen Endgerät 44 angezeigten Freigabecodes durch einen Bediener vorgesehen. Eine darüber hinausgehende Datenübertragung zwischen der Maschine 1 und dem mobilen Endgerät 44 ist in diesem Ausführungsbeispiel nicht vorgesehen, nicht notwendig und findet nicht statt.

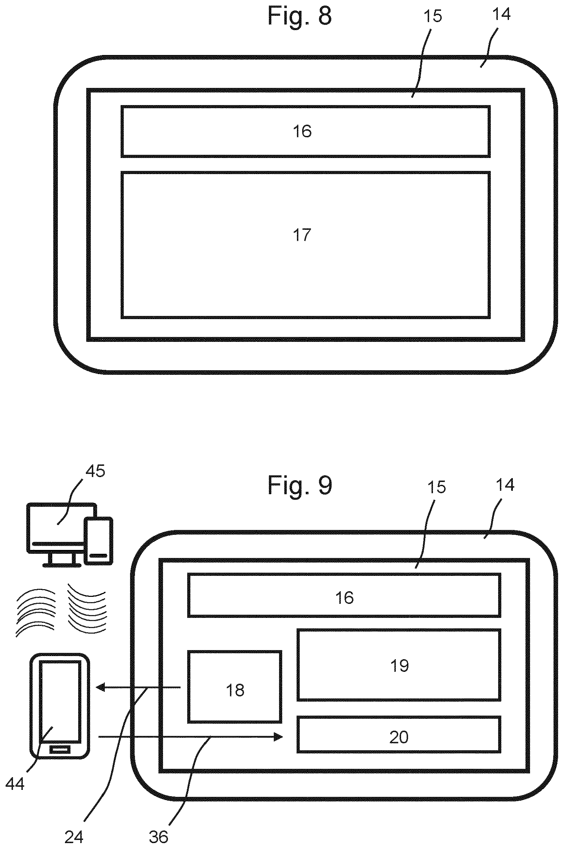

Die Figuren 8 und 9 zeigen eine Steuereinrichtung 14 mit Anzeigeeinrichtung 15 und stellen dar, wie ein Bediener in einer Variante das erfindungsgemäße Verfahren beginnen kann. Beispielsweise wird dem Bediener gemäß Figur 8 auf der Anzeigeeinrichtungen 15 eine Menüüberschrift 16 angezeigt, beispielsweise "Verfügbare Optionen/Konfigurationen". Zusätzlich wird dem Bediener ein Auswahlmenü 17 gezeigt, das eine Liste aller möglichen Konfigurationen beziehungsweise Konfigurationsänderungen, sprich Funktionsumfangserweiterungen, anzeigt, die für die spezielle Maschine 1 verfügbar sind. In dieser Liste sind beispielsweise ebenfalls Optionen verfügbar, in der Vergangenheit durchgeführte Funktionsumfangserweiterungen wieder rückgängigzu machen. Über Bedienelemente der Steuereinheit 14 oder, falls die Anzeigeeinrichtung 15 als Touchscreen ausgebildet ist, direkt über die Anzeigeeinrichtung 15 selbst, kann der Bediener nun durch die Liste der verfügbaren Funktionsumfangserweiterungen scrollen und eine auswählen. Sobald eine Funktionsumfangserweiterung ausgewählt wurde, wechselt die Anzeige auf der Anzeigeeinrichtung 15 beispielsweise gemäß Figur 9. Nun wird dem Bediener unter der Menüüberschrift16, die insbesondere die Bezeichnung der gewählten Funktionsumfangserweiterung enthält, eine Informationsausgabe 19 angezeigt, wobei hier verschiedene allgemeine Informationen zur gewählten Funktionsumfangserweiterung zusammengestellt sind. Beispielsweise können hier auch Informationen angezeigt werden, die die Voraussetzungen für die Durchführung der Funktionsumfangserweiterung betreffen und die von der Maschine 1 erfassbar sind. Beispielsweise wird hier angezeigt, ob ein notwendiges Hardwareelement bereits an der Maschine 1 montiert ist oder nicht, solange dies von der Maschine 1 detektierbar ist. Darüber hinaus zeigt die Anzeigeeinrichtung 15 dem Bediener einen optoelektronisch lesbaren Code 18 an, den der Bediener mithilfe des mobilen Endgerätes 44 lesen (Pfeil 24) kann und der dir bereits vorstehend beschriebenen Informationen enthält. Schließlich zeigt die Anzeigeeinrichtung 15 ebenfalls ein Eingabefeld 20, über das der Bediener den im weiteren Verlauf des Verfahrens generierten Freigabecode an der Steuereinrichtung 14 eingeben (Pfeil 36) kann. Eine über das Lesen 24 des Codes 18 und das Eingeben 36 des Freigabecodes hinausgehende Kommunikation zwischen der Steuereinrichtung 14 und dem mobilen Endgerät 44, und insbesondere auch dem zentralen Server 45, findet in diesem Ausführungsbeispiel nicht statt Die weitere Informationsübertragung und - verarbeitung wird ausschließlich vom mobilen Endgerät 44 und/oder dem zentralen Server 45 durchgeführt. Sämtliche nachstehend noch näher erläuterten Verfahrensschritte vom Anzeigen des Codes 18 auf der Anzeigeeinrichtung 15 bis hin zum Eingeben 36 des Freigabecodes in das Eingabefeld 20 werden daher außerhalb der Steuereinrichtung 14 vom mobilen Endgerät 44 und/oder dem zentralen Server 45, gegebenenfalls unter Mitwirkung des Bedieners, durchgeführt

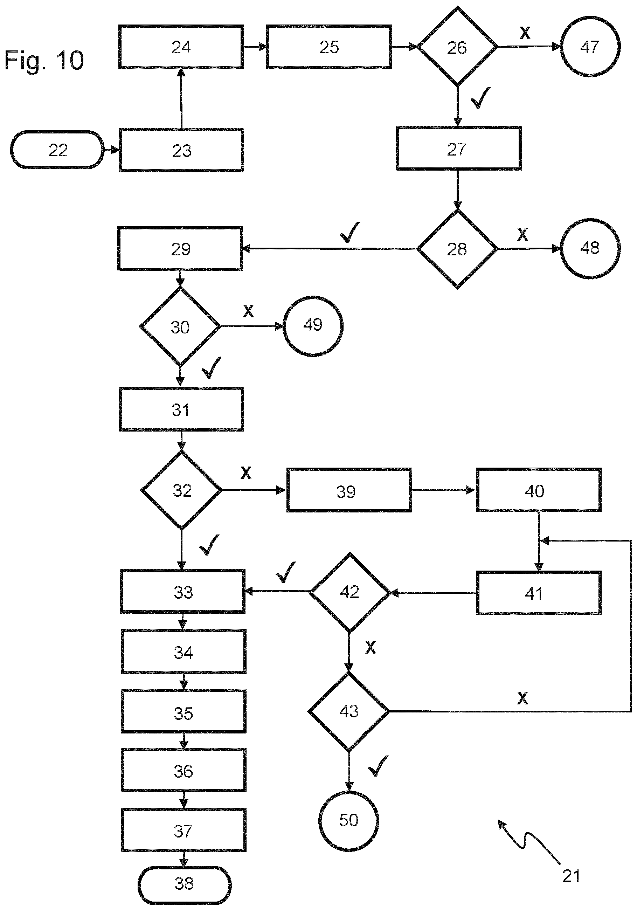

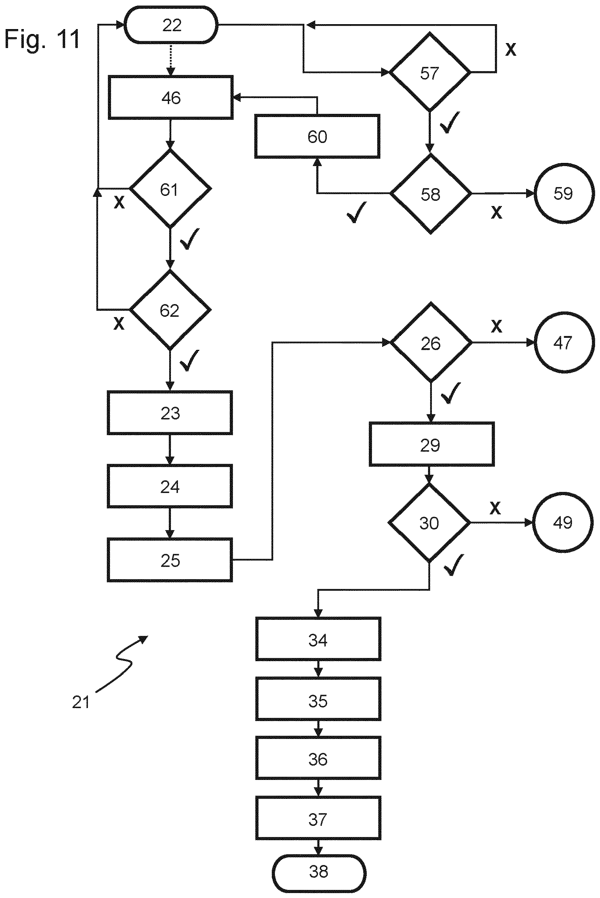

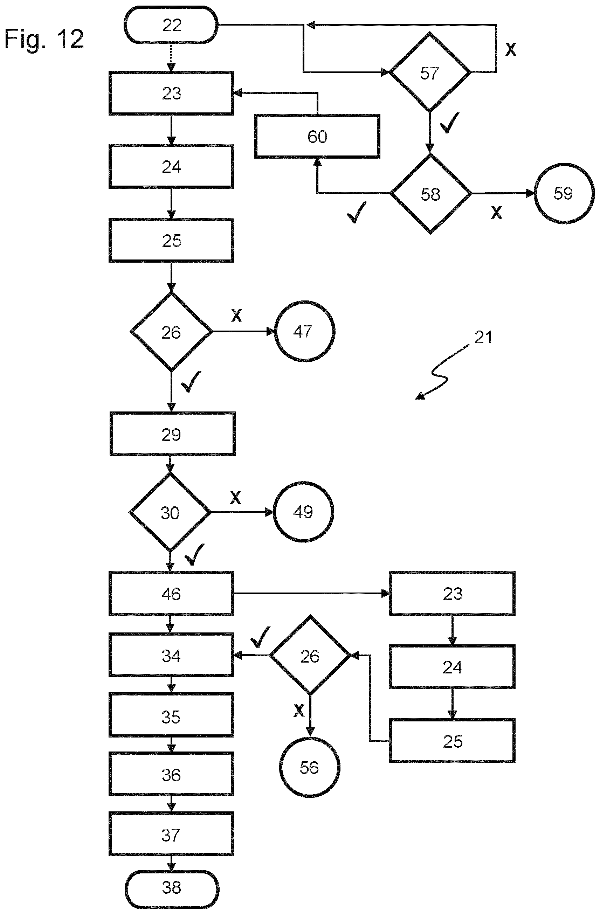

Figur 10 zeigt ein Ablaufdiagramm des Verfahrens 21 zur Funktionsumfangserweiterung der Maschine 1. Im Ablaufdiagramm gemäß Figur 10 und ebenfalls in den Ablaufdiagrammen gemäß den Figuren 11 und 12 werden Ablaufwege, die nach einem positiven Ergebnis einer Überprüfung eingeschlagen werden, durch ein Häkchen gekennzeichnet Ablaufwege, die nach einem negativen Ergebnis einer Überprüfung eingeschlagen werden, werden dagegen durch ein Kreuz gekennzeichnet. Der Beginn des Verfahrens 21 ist durch den Schritt 22 bezeichnet. Hierbei wird beispielsweise, wie vorstehend beschrieben, eine Funktionsumfangserweiterung vom Bediener an der Steuereinrichtung 14 ausgewählt, entweder aus einer entsprechenden Liste oder nach einem Vorschlag der Steuereinrichtung 14 im Betrieb der Maschine 1. Hat der Bediener eine gewünschte Funktionsumfangserweiterung ausgewählt, so erfolgt das Anzeigen 23 eines optoelektronisch lesbaren Codes 18 auf der Anzeigeeinrichtung 15. Mithilfe des mobilen Endgerät 44 erfolgt dann das Lesen 24 des Codes 18, bei dem die im Code 18 gespeicherte Information vom mobilen Endgerät 44 aufgenommen wird. Dem Bediener werden dann vom mobilen Endgerät 44 bereits Informationen über den aktuellen Vorgang, beispielsweise über den weiteren Verlauf zur Durchführung der Funktionsumfangserweiterung, angezeigt. Diese Informationen können beispielsweise je nach dem Servicelevel des Bedieners des mobilen Endgerätes 44 unterschiedlich zusammengestellt sein. Wichtig ist, dass, selbst wenn das Servicelevel des Bedieners nicht ausreicht, um die weiteren Schritte selbst durchzuführen, ihm dennoch eine konstruktive Anleitung angeboten wird, wie er die gewünschte Funktionsumfangserweiterung erhalten kann. Spätestens durch die Anzeige von Kontaktdaten zu einem Servicepartner in der Nähe des Bedieners wird dies sichergestellt. Es folgt das Übermitteln 25 der im Code 18 gespeicherten Informationen vom mobilen Endgerät 44 an den zentralen Server 45, beispielsweise über das Internet. Am zentralen Server 45 werden die Informationen verarbeitet und beispielsweise ebenfalls anhand der im Code 18 enthaltenen Prüfsumme sichergestellt, dass die Datenübertragung vom mobilen Endgerät 44 zum Server 45 ausreichend fehlerfrei funktioniert hat. Darüber hinaus wird ein Überprüfen 26 des Codes 18 durchgeführt, ob der übermittelte Code 18 überhaupt zum vorliegenden Verfahren 21 gehört. Hierzu wird beispielsweise die Identifikation des Codes 18 untersucht, um festzustellen, zu welchem Zweck der Code 18 an den Server 45 übermittelt wurde. Liegt der Zweck in einer Funktionsumfangserweiterung, so läuft das Verfahren 21 wie hierin beschrieben weiter ab. Liegt der Zweck dagegen beispielsweise in einer Fehlermeldung oder einem anderen Vorgang, für den von der Steuereinrichtung 14 generierte Codes 18 an den Server 45 übertragen werden, so erfolgtein Überleiten 47 in die entsprechende andere Teilroutine eines anderen am Server 45 durchgeführten Verfahrens, beispielsweise zur Fehlermeldung.

Ergibt das Überprüfen 26 des Codes 18, dass eine Funktionsumfangserweiterung vom Bediener angefragt wurde, so erfolgt als nächstes ein Überprüfen 27, um welche Funktionsumfangserweiterung es sich konkret handelt und welche Voraussetzungen für diese an der Maschine 1 vorliegen müssen. Beispielsweise kommt hier infrage, ob die gewünschte Funktionsumfangserweiterung sich alleine durch eine Änderung an der Software der Maschine 1 erreichen lässt, oder ob ebenfalls Hardwareänderungen notwendig sind. Sind die Anforderungen festgestellt, so erfolgt ein Überprüfen 28, ob die Maschine 1 anhand der im Code 18 enthaltenen Informationen die Anforderungen an die Software und/oder die Hardware für die gewünschte Funktionsumfangserweiterung erfüllt oder nicht. Ergibt sich, dass die Maschine 1 die notwendigen Voraussetzungen nicht erfüllt, so überträgt der Server 45 eine entsprechende Mitteilung an das mobile Endgerät 44, an dem eine Informationsausgabe 48 erfolgt, die den Bediener darüber informiert, welche Voraussetzungen für die gewünschte Funktionsumfangserweiterung aktuell von der Maschine 1 nicht erfüllt werden und wie er diese Voraussetzungen erfüllen kann. Kann der Bediener diese Voraussetzungen nicht selbst erfüllen, so wird ihm ein Kontakt zu einem Servicepartner in seiner Nähe vorgeschlagen. Ergibt das Überprüfen 28, dass die Maschine 1 die Voraussetzungen für die gewünschte Funktionsumfangserweiterung erfüllt, so führt der Server 45 als nächstes ein Überprüfen 29 des notwendigen Servicelevels durch, welches notwendig ist, um die Funktionsumfangserweiterung an der Maschine 1 zu aktivieren. Beispielsweise können Funktionsumfangserweiterungen, die in sicherheitsrelevante Bereiche der Maschine eingreifen oder deren Aktivierung an der Maschine 1 sicherheitsrelevant sein kann, nur von Bedienern miteinem ausreichenden Servicelevel durchgeführt werden. Diese Bediener haben dann beispielsweise eine entsprechende Schulung erhalten, die sie zum Durchführen der notwendigen Arbeiten befähigt und berechtigt. Ist der notwendige Servicelevel des Bedieners festgestellt, so erfolgt ein Überprüfen 30, ob der Servicelevel des Bedieners des mobilen Endgerätes 44 ausreichend hoch ist. Hierfür kann das Servicelevel des Bedieners des mobilen Endgerätes 44 ebenfalls an den Server 45 zusammen mit den Informationen des Codes 18 übermittelt werden. Alternativ ist es auch möglich, dass das mobile Endgerät44 die Identität des Bedieners, beispielsweise über eine individuelle, datenschutzkonforme Kennzahl, an den Server 45 übermittelt und die Servicelevel sämtlicher möglichen Bediener am zentralen Server 45 hinterlegt sind. Ergibt das Überprüfen 30, dass das Servicelevel des Bedieners des mobilen Endgerätes 44 nicht ausreicht, um die Funktionsumfangserweiterung an der Maschine 1 zu Ende zu führen, so überträgt der Server 45 diese Information an das mobile Endgerät 44, an dem eine Informationsausgabe 49 erfolgt, die den Bediener darüber in Kenntnis setzt, dass sein Servicelevel nicht ausreicht, um die Funktionsumfangserweiterung vollständig freizuschalten. Auch hier wird ihm wieder ein Kontakt zu einem Servicepartner mit ausreichendem Servicelevel angezeigt

Ist das Servicelevel des Bedieners des mobilen Endgerätes 44 ausreichend, so erfolgt als nächstes ein Überprüfen 31, ob die gewünschte Funktionsumfangserweiterung kostenpflichtig ist oder nicht Hieran schließt sich ein Überprüfen 32 an, ob die Bezahlung bereits erfolgt ist oder nicht Bei nicht kostenpflichtigen Funktionsumfangserweiterungen gilt die Bezahlung automatisch und immer als bereits erfolgt. Stellt der Server 45 also einen Zahlungseingang oder einen Rechnungsstellungsprozess fest oder ist die Funktionsumfangserweiterung nicht kostenpflichtig, so erfolgt als nächstes ein Festlegen 33 einer zeitlichen Limitierung, für die die Funktionsumfangserweiterung aktiviert werden soll. Die zeitliche Limitierung kann dabei beispielsweise unendlich betragen, so dass eine permanente Funktionsumfangserweiterung besteht. Dies ist beispielsweise dann der Fall, wenn der Bediener die Funktionsumfangserweiterung kauft und diese dann permanent an der Maschine 1 nutzbar sein soll. Alternativ hierzu kann es sein, dass der Bediener die gewünschte Funktionsumfangserweiterung lediglich für einen bestimmten Zeitraum mietet. Verschiedene zeitliche Limitierungen können hierbei beispielsweise ebenfalls an der Steuereinrichtung 14 ausgewählt werden und werden im Endeffekt wie unterschiedliche Funktionsumfangserweiterungen im Verfahren 21 behandelt. Ist das Festlegen 33 der zeitlichen Limitierung erfolgt, so schließt sich ein Erstellen 34 eines Freigabecodes durch den Server 45 an, bei dem beispielsweise sowohl die zeitliche Limitierung als auch die Maschine 1 und eine eventuelle begrenzte zeitliche Gültigkeit des Freigabecodes berücksichtigt werden. Entsprechende Algorithmen zur Erstellung des Freigabecodes sind dem Fachmann bekannt und müssen hier nicht näher erläutert werden. Liegt der entsprechende Freigabecode am Server 45 vor, erfolgt ein Übermitteln 35 des Freigabecodes an das mobile Endgerät 44, von dem dem Bediener der Freigabecode angezeigt wird. Durch diesen folgt nun ein Eingeben 36 des Freigabecodes an der Steuereinrichtung 14, beispielsweise in das Eingabefeld 20 auf der Anzeigeeinrichtung 15. Die Steuereinrichtung 14 überprüft dann den Freigabecode, um sicherzustellen, dass der Freigabecode auch tatsächlich für die Maschine 1 gedacht ist und insbesondere auch zum aktuellen Zeitpunkt noch gültig ist. Stellt die Steuereinrichtung 14 keine Unregelmäßigkeiten fest, so erfolgt als nächstes das Freischalten 37 der gewünschten Funktionsumfangserweiterung, gegebenenfalls für den Zeitraum einer zeitlichen Limitierung oder permanent. Das Verfahren 21 ist dann abgeschlossen und endet im Schritt 38. Die Funktionsumfangserweiterung ist für den Bediener der Maschine 1 nun verfügbar und kann ab sofort im Arbeitseinsatz genutzt werden.

Wird beim Überprüfen 32 der Bezahlung einer kostenpflichtigen Funktionsumfangserweiterung festgestellt, dass eine Bezahlung noch nicht stattgefunden hat, so wird der entsprechende Vorgang bis zu diesem Punkt als Bestellung des Bedieners, der die Funktionsumfangserweiterung erwerben möchte, gewertet. Der Server 45 wird in diesem Fall wie ein Onlineshop genutzt. Es erfolgt daher ein Erstellen 39 eines Auftrages zur Bereitstellung der Funktionsumfangserweiterung. Da der Bediener die kostenpflichtige Funktionsumfangserweiterung bezahlen muss, erfolgt als nächstes ein Übermitteln 40 einer Zahlungsanforderung vom Server 45 an das mobile Endgerät 44. Diese wird dem Bediener entsprechend angezeigt, sodass der Bediener die Zahlung beispielsweise über online-Bezahldienste abwickeln kann. Auf dem Server 45 wird derweil ein Warten 41 auf den Eingang der Zahlung durchgeführt In regelmäßigen Abständen erfolgt ein Überprüfen 42, ob die Zahlung eingegangen ist. Ergibt das Überprüfen 42, dass der Bediener die gewünschte Funktionsumfangserweiterung bezahlt hat und die Zahlung eingegangen ist, so wird das Verfahren 21 wie vorstehend erläutert mit dem Festlegen 33 einer zeitlichen Limitierung fortgesetzt. Im Fall, dass das Überprüfen 42 ergibt, dass keine Zahlung eingegangen ist, wird ein zusätzliches Überprüfen 43 durchgeführt, ob eine Zeitüberschreitung für die Zahlung vorliegt. Liegt noch keine Zeitüberschreitung vor, so wird das Warten 41 auf die Zahlung beibehalten. Ist dagegen eine maximale Zeit, die für die Durchführung der Bezahlung zur Verfügung steht, abgelaufen, so wird eine entsprechende Mitteilung generiert und an das mobile Endgerät 44 übermittelt. Am mobilen Endgerät 44 erfolgt dann eine entsprechende Informationsausgabe 50 für den Bediener, dass die Bezahlung aufgrund einer Zeitüberschreitung nicht erfolgt ist, so dass der Bediener das Problem gegebenenfalls beheben kann. Beispielsweise kann der Bediener das Verfahren 21 neu starten und es noch mal versuchen.

In Figur 11 ist ein Ablaufdiagramm des Verfahrens 21 zur Wartung einer selbstfahrenden Maschine 1 gezeigt. Das Verfahren 21 beginnt im Schritt22. Die Steuereinrichtung 40 überprüft in regelmäßigen Abständen, ob oder wann ein Wartungsintervall abläuft. Hierfür erfolgt ein Überprüfen 57, ob die Betriebszeitder Maschine 1 das Wartungsintervall minus eines Warnungspuffers überschreitet. Hierbei wird vom Wartungsintervall eine konstante, vorgegebene Zeit als Warnungspuffer abgezogen. Ergibt das Überprüfen 57, dass die Betriebszeit der Maschine 1 das Wartungsintervall minus des Warnungspuffers nicht überschreitet, so wird das Verfahren 21 zurückgesetzt Dies bedeutet, dass das Verfahren 21 wieder von vorne beginnt. Ansonsten erfolgt als nächstes ein Überprüfen 58, ob die Betriebszeit der Maschine 1 das Wartungsintervall überschreitet Beim Überprüfen 58 wird also kein Warnungspuffer mehr abgezogen. Ergibt das Überprüfen 58, dass die Betriebszeit der Maschine 1 das Wartungsintervall an sich nicht übersteigt, so liegtdie Betriebszeitder Maschine 1 im Warnungspuffer. Es erfolgt daher ein Anzeigen 59 einer Information für den Bediener, mit der dieser darüber informiert wird, dass demnächst ein Wartungsintervall abläuft beziehungsweise eine Wartung notwendig ist. Hierbei kann dem Bediener ebenfalls die Restdauer des Warnungspuffers angezeigt werden. Ergibt das Überprüfen 58, dass die Betriebszeit der Maschine 1 das Wartungsintervall übersteigt, so ist eine Wartung fällig. Es erfolgt daher ein Auffordern 60 des Bedieners, eine Wartung in die Wege zu leiten. Hierfür wird eine entsprechende Anzeige an der Anzeigevorrichtung 15 generiert, die den Bediener die Notwendigkeit einer Wartung informiert. Darüber hinaus steht es dem Bediener jederzeitfrei, von sich aus eine Wartung aktiv in die Wege zu leiten, was durch den gestrichelten Pfeil zwischen den Schritten 22 und 23 in Figur 11 dargestellt ist.

Grundsätzlich erfolgt als nächstes das Durchführen 46 der Wartung selbst. Dies kann durch den Bedieneroder einen Servicepartner erfolgen. An der Steuervorrichtung 14 erfolgt über ein Dialogfeld auf der Anzeigevorrichtung 15 ein Abfragen 61, ob das Durchführen 46 der Wartung erfolgreich abgeschlossen ist. Wird dies vom Bediener oder dem Servicepartner verneint, so wird das Verfahren 21 zurückgesetzt. Wird dagegen das Durchführen 46 der Wartung bestätigt, so erfolgt als nächstes ebenfalls über das Dialogfeld auf der Anzeigevorrichtung 15 eine Abfrage 62, ob der Bediener beziehungsweise der Servicepartner das Wartungsintervall zurücksetzen möchte. Wird dies verneint, so wird das Verfahren 21 ebenfalls zurückgesetzt und wird mit weiterhin offenem Wartungsintervall neu begonnen. Bestätigt der Bediener beziehungsweise der Servicepartner dagegen, dass das Wartungsintervall zurückgesetztwerden soll, so erfolgt das Anzeigen 23 eines optoelektronisch lesbaren Codes 18 auf der Anzeigeeinrichtung 15. Die im Code 18 enthaltene Information kann dann durch ein Lesen 24 des Codes 18 durch das mobile Endgerät 44 auf dieses übertragen werden. Dem Bediener können dann vom mobilen Endgerät 44 Informationen über den aktuellen Vorgang angezeigt werden, beispielsweise über den weiteren Verlauf bis zur Quittierung des Wartungsintervalls. Auch diese Informationen können je nach dem Servicelevel des Bedieners des mobilen Endgerätes 44 unterschiedlich sein. Durch ein Übermitteln 25 der im Code 18 gespeicherten Informationen vom mobilen Endgerät44 an den zentralen Server 45, beispielsweise über das Internet, werden diese Informationen auch die Maschinenhersteller zugänglich gemacht. Am zentralen Server 45 werden die Informationen aus dem Code 18 verarbeitet und beispielsweise anhand der Prüfsumme verifiziert. Anhand eines Überprüfens 26 des Codes 18 wird ermittelt, ob der übermittelte Code 18 zum vorliegenden Verfahren 21, also der Wartung beziehungsweise der Quittierung von Wartungsintervallen gehört. Gehört der Code 18 nicht zum Verfahren 21 zur Wartung der Maschine 1, so erfolgt auch hier ein Überleiten 47 in eine entsprechende andere Teilroutine. Gehört der Code 18 zum Verfahren 21, so erfolgt als nächstes ein Überprüfen 29 des notwendigen Servicelevels, welches notwendig ist, um das Wartungsintervall zurückzusetzen beziehungsweise zu quittieren. Ist der notwendige Servicelevel des Bedieners festgestellt, so erfolgt ein Überprüfen 30, ob der Servicelevel des Bedieners des mobilen Endgerätes 44 ausreichend hoch ist. Ergibt das Überprüfen 30, dass das Servicelevel des Bedieners des mobilen Endgerätes 44 nicht ausreicht, um die Wartung an der Maschine 1 durchzuführen, so überträgt der Server 45 diese Information an das mobile Endgerät 44, an dem eine Informationsausgabe 49 erfolgt, die den Bediener darüber in Kenntnis setzt, dass sein Servicelevel nicht ausreicht, um das Wartungsintervall zurückzusetzen. In diesem Fall wird dem Bediener ein Kontakt zu einem oder mehreren Servicepartnern mit ausreichendem Servicelevel angezeigt.

In dem Fall, dass nach dem Überprüfen 30 feststeht, dass der Servicelevel des Bedieners des mobilen Endgerätes 44 zur Zurücksetzung des Wartungsintervalles ausreichend ist, erfolgt als nächstes das Erstellen 34 des Freigabecodes am Server 45. Dieser wird durch ein Übermitteln 35 des Freigabecodes an das mobile Endgerät 44 übertragen. Das mobile Endgerät 44 zeigt dem Bediener den Freigabecode an, sodass dieser das Eingeben 36 des Freigabecodes an der Steuereinrichtung 14, beispielsweise in das Eingabefeld 20 auf der Anzeigeeinrichtung 15, durchführen kann. Die Eingabe des Freigabecodes stellt dabei den letzten Schritt der Wartungsarbeiten dar. Die Steuereinrichtung 14 überprüft den Freigabecode gemäß den vorstehenden Ausführungen. Ist alles in Ordnung, so erfolgt das Freischalten 37 des Wartungsintervalles, was im Wesentlichen einer Quittierung der Wartungsanforderung beziehungsweise einem Zurücksetzen des Wartungsintervalls entspricht. Das Verfahren 21 ist dann abgeschlossen und endet im Schritt 38.

In Figur 12 ist ein Ablaufdiagramm eines alternativen Verfahrens 21 zur Wartung einer selbstfahrenden Maschine 1 gezeigt. Das Verfahren 21 beginnt im Schritt 22. Auch hier wird, wie im Verfahren 21 gemäß Figur 11, als erstes von der Steuereinrichtung 14 entweder aufgrund eines Zeitablaufes ein Auffordern 60 des Bedieners durchgeführt, eine Wartung durchzuführen, oder der Bediener leitet dies von selbst ein. Zur Vermeidung von Wiederholungen wird für diesen Teil des Verfahrens 21 gemäß Figur 12 auf die vorstehenden Ausführungen zu Figur 11 Bezug genommen.

Wählt der Bediener die Wartung aus, entweder von sich aus oder nach dem Auffordern 60, so erfolgt das Anzeigen 23 eines optoelektronisch lesbaren Codes 18 auf der Anzeigeeinrichtung 15. Es kann dann, wie vorstehend bereits beschrieben, ein Lesen 24 des Codes 18 durch das mobile Endgerät 44 erfolgen. Hierbei werden die im Code 18 gespeicherten Informationen vom mobilen Endgerät 44 ausgelesen. Dem Bediener werden dann vom mobilen Endgerät 44 Informationen über den aktuellen Vorgang, beispielsweise über den weiteren Verlauf zur Durchführung der Wartung, angezeigt Auch diese Informationen können je nach dem Servicelevel des Bedieners des mobilen Endgerätes 44 unterschiedlich sein. So wird dem Bediener mitgeteilt, wie er die Wartung durchführen kann oder wen er kontaktieren soll, um die Wartung durchführen zu lassen. Es folgt das Übermitteln 25 der im Code 18 gespeicherten Informationen vom mobilen Endgerät 44 an den zentralen Server 45, beispielsweise über das Internet. Am zentralen Server 45 werden die Informationen aus dem Code 18 verarbeitet und beispielsweise anhand der Prüfsumme verifiziert. Auch wird ein Überprüfen 26 des Codes 18 durchgeführt, ob der übermittelte Code 18 überhaupt zum vorliegenden Verfahren 21 gehört. Gehört der Code 18 nicht zum Verfahren 21 zur Wartung der Maschine 1, so erfolgt ein Überleiten 47 in eine entsprechende andere Teilroutine. Gehört der Code 18 zum Verfahren 21, so erfolgt als nächstes ein Überprüfen 29 des notwendigen Servicelevels, welches notwendig ist, um die Wartung an der Maschine 1 durchzuführen und/oder das Wartungsintervall zurückzusetzen. Auch hier liegen Sicherheitsaspekte zugrunde, um sicherzustellen, dass nur ausreichend geschulte Mitarbeiter die jeweilige Wartung an der Maschine 1 durchführen. Ist der notwendige Servicelevel des Bedieners festgestellt, so erfolgtein Überprüfen 30, ob der Servicelevel des Bedieners des mobilen Endgerätes 44 ausreichend hoch ist. Ergibt das Überprüfen 30, dass das Servicelevel des Bedieners des mobilen Endgerätes 44 nicht ausreicht, um die Wartung an der Maschine 1 durchzuführen, so überträgt der Server 45 diese Information an das mobile Endgerät 44, an dem eine Informationsausgabe 49 erfolgt, die den Bediener darüber in Kenntnis setzt, dass sein Servicelevel nicht ausreicht, um die Wartung durchzuführen und/oder das Wartungsintervall zurückzusetzen. Auch hier wird ihm wieder ein Kontakt zu einem Servicepartner mit ausreichendem Servicelevel angezeigt In dem Fall, dass nach dem Überprüfen 30 feststeht, dass der Servicelevel des Bedieners des mobilen Endgerätes 44 zur Durchführung der Wartung ausreichend ist, erfolgt als nächstes ein Durchführen 46 der Wartung selbst. Dies wird beispielsweise vom Bediener des mobilen Endgerätes 44 erledigt, oder von einem Servicepartner, der allerdings beispielsweise ebenfalls über ein mobiles Endgerät 44 verfügt und der das Verfahren 21 im Rahmen seiner Servicetätigkeit durchführt. Einem Nutzer mit ausreichend hohem Servicelevel werden hierbei ebenfalls weitere, hilfreiche Informationen angezeigt, beispielsweise Anleitungen zum Durchführen 46 der Wartung und/oder ein digitales Serviceheft mit vollständiger, insbesondere alle bisherigen Wartungen und/oder Funktionsumfangserweiterungen umfassender, Maschinenhistorie. Auch der Garantiestatus der Maschine kann in diesen Informationen enthalten sein.

Der weitere Verlauf des Verfahrens 21 hängt davon ab, ob es möglich ist, die Durchführung der Wartungsarbeiten von der Maschine 1, beispielsweise durch die Steuereinrichtung 14, zu detektieren. Dies kann beispielsweise dadurch gelingen, wenn Verschleißteile mit Identifizierungseinrichtungen, beispielsweise RFID-Chips, ausgestattet sind und diese ausgelesen werden oder wenn andere Sensoren verfügbar sind, die einen erfolgreichen Abschluss der Wartung detektieren. Ob die Durchführung der Wartungsarbeiten auf diese Weise objektiv feststellbar ist oder nicht, kann von Wartung zu Wartung unterschiedlich sein. Ist eine derartige Detektion nicht möglich, so wird dem die Wartung durchführenden Bediener oder Servicepartner mitausreichendem Servicelevel schlicht vertraut. Dieser steht dann mit seinem Namen für die Durchführung und die Qualität der Wartung. Beispielsweise kann er am mobilen Endgerät 44 durch eine Eingabe die Durchführung der Wartung bestätigen. Dies wird an den Server 45 übermittelt, der daraufhin das Erstellen 34 des Freigabecodes durchführt, woraufhin ein Übermitteln 35 des Freigabecodes an das mobile Endgerät44 erfolgt. Das mobile Endgerät 44 zeigt dem Bediener den Freigabecode an, sodass dieser das Eingeben 36 des Freigabecodes an der Steuereinrichtung 14, beispielsweise in das Eingabefeld 20 auf der Anzeigeeinrichtung 15, durchführen kann. Die Eingabe des Freigabecodes stellt dabei den letzten Schritt der Wartungsarbeiten dar. Die Steuereinrichtung 14 überprüft den Freigabecode gemäß den vorstehenden Ausführungen. Ist alles in Ordnung, so erfolgt das Freischalten 37 des Wartungsintervalles, was im Wesentlichen einer Quittierung der Wartungsanforderung entspricht. Das Verfahren 21 ist dann abgeschlossen und endet im Schritt 38.

Ist es dagegen möglich, dass die Maschine 1, beispielsweise über die Steuereinrichtung 14 und/oder an diese angeschlossene Sensoren, objektiv die Durchführung der Wartungsarbeiten detektieren kann, so kann eine zusätzliche Sicherheitsebene eingezogen werden. So ist es dann beispielsweise möglich, dass nach dem Durchführen 46 der Wartungsarbeiten ein neuer optoelektronisch lesbarer Code 18 von der Steuereinrichtung 14 generiert wird, der die detektierten Ergebnisse der Wartung enthält. Dieser neue Code 18 wird sodann über ein Anzeigen 23 auf der Anzeigeeinrichtungen 15 verfügbar gemacht, woraufhin ein erneutes Lesen 24 des Codes 18 durch das mobile Endgerät44 erfolgt. Die im neuen Code 18 gespeicherten Informationen werden dann durch ein erneutes Übermitteln 25 an den Server 45 übertragen. Anhand der übertragenen Informationen erfolgt dann am Server 45 ein Überprüfen 26, ob die Wartungsarbeiten vollständig und erfolgreich durchgeführt wurden. Ist dies der Fall, so fährt das Verfahren 21 wie vorstehend bereits beschrieben mit dem Erstellen 34 des Freigabecodes fort. Ergibt sich dagegen, dass die Wartung entweder nicht vollständig oder nicht erfolgreich durchgeführt wurde, so wird eine entsprechende Mitteilung vom Server 45 generiert und an das mobile Endgerät 44 übermittelt. Am mobilen Endgerät 44 erfolgt dann eine Informationsausgabe 56, die den Bediener über die fehlgeschlagene Wartung informiert und diesem ebenfalls anzeigt, wo genau das Problem liegt und wie er dieses beheben kann. Alternativ kann dem Bediener wieder gegebenenfalls angezeigt werden, an wen er sich wenden kann, um das Problem beheben zu lassen.

Insgesamt gelingt es durch das Verfahren 21, eine Funktionsumfangserweiterung oder eine Wartung bei einer Maschine 1 einfacher, wirtschaftlicher und schneller zu gestalten. Hierdurch wird die Flexibilität der Maschine 1 erhöht, da der Bediener sämtliche möglichen Maschinenkonfigurationen schnell und einfach nutzen kann. Durch im Verfahren 21 vorgesehene Sicherheitsmechanismen wird gleichzeitig ein sicherer und zuverlässiger Betrieb der Maschine 1 gewährleistet.

Abschließend soll das erfindungsgemäße Verfahren zum Anbau einer Hardware-Komponente an einem Beispiel näher veranschaulicht werden. Dazu wird lediglich beispielhaftzunächst Bezug auf die Fig. 1 genommen. Die anzubauende Hardware-Komponente soll ein Splittstreuer 63 sein. Dieser ist in Fig. 1 strichliert angedeutet, um zu veranschaulichen, dass der Splittstreuer 63 zunächst nicht vorhanden ist Der Bediener kann nun aus dem Betriebsmenü der Maschine 1 die Zusatzoption "Splittstreuer" aufrufen. Die Steuereinrichtung 14 kann nun prüfen, ob gegebenenfalls schon ein Splittstreuer an der Maschine 1 vorhanden ist bzw. ob die angeforderte Hardwarekomponente bereits verfügbar ist. Dazu kann beispielsweise ein geeigneter Sensor, in Fig. 1 Sensor 64, vorgesehen sein, der beispielsweise mechanisch und/oder elektronisch prüft, ob an der Anbaustelle für die Hardwarekomponente diese bereits vorhanden ist. Der Sensor 64 steht dazu mit der Signalübertragungsleitung 65 mit der Steuereinrichtung 14 und die Steuereinrichtung 14 mit der Anzeigeeinrichtung 15 über die Signalübertragungsleitung 66 in Verbindung. Diese können kabelgebunden oder auch kabellos sein. Es kann nun das Verfahren beispielsweise gemäß Fig. 10 durchgeführt werden. Ist der Splittstreuer 63 bereits angebaut, kann nun über das beispielsweise in Fig. 10 gezeigte Verfahren die entsprechende maschinenseitige Steuerung des Splittstreuers in der Maschinenbetriebssoftware freigeschaltet werden. Wird der Splittstreuer 63 dagegen nicht erkannt und/oder die Maschine 1 lässt eine solche Konfiguration nicht zu, kann dies dem Bediener nach entsprechender Prüfung angezeigt werden. Ergänzend oder alternativ kann der Sensor 64 allerdings beispielsweise auch ein Ölqualitätssensor sein oder einen Ölqualitätssensor umfassen, der die aktuelle Qualität eines Öls der Maschine 1, beispielsweise eines Hydrauliköls oder eines Motoröls, sensiert und das Ergebnis an die Steuereinrichtung 14 übermittelt Auch diese Information kann dann über den Code 18 an den zentralen Server 45 übermittelt werden, wie vorstehend bereits erläutert.

## Patentansprüche

1. Verfahren (21) zur Wartung oder Funktionsumfangserweiterung einer selbstfahrenden Maschine (1), insbesondere Tandemwalze, Walzenzug, Gummiradwalze, Müllverdichter, Straßenfertiger, Straßenfräse, Recycler oder Stabilisierer,
**gekennzeichnet durch** die Schritte:
- Erzeugen eines auf kurze Entfernung identifizierbaren Codes (18) durch eine Steuereinrichtung (14) der Maschine (1) entweder selbsttätig durch die Steuereinrichtung (14) nach einem Ablauf eines Wartungsintervalls oder nach einer Anfrage eines Bedieners nach einer Funktionsumfangserweiterung, wobei der Code (18) eine Information über wenigstens einen sich im Laufe des Betriebs der Maschine (1) ändernden Maschinenzustand enthält,
- Identifizieren des Codes (18) durch ein mobiles Endgerät (44),
- Übermitteln (25) der im Code (18) enthaltenen Informationen an einen zentralen Server (45),
- Übermitteln (35) eines Freigabecodes vom Server (45) an das mobile Endgerät (44),
- Übermitteln des Freigabecodes an die Steuereinrichtung (14) der Maschine (1),
- Freischalten (37) des Wartungsintervalls oder der Funktionsumfangserweiterung.

2. Verfahren (21) nach Anspruch 1,
**dadurch gekennzeichnet,**
**dass** der auf kurze Entfernung identifizierbare Code (18) ein Signal zur kabellosen Übertragung von Daten umfasst, insbesondere ein NFC-, Bluetooth-, WLAN-, RFID- oder Infrarot-Signal.

3. Verfahren (21) nach einem der vorhergehenden Ansprüche,
**dadurch gekennzeichnet,**
**dass** der auf kurze Entfernung identifizierbare Code (18) ein optoelektronisch lesbarer Code (18) ist und dass ein Anzeigen (23) des optoelektronisch lesbaren Codes (18) auf einer Anzeigeeinrichtung (15) der Steuereinrichtung (14) erfolgt, wobei insbesondere das Identifizieren des Codes (18) das Lesen (24) des optoelektronisch lesbaren Codes (18) durch ein mobiles Endgerät (44) umfasst.

4. Verfahren (21) nach einem der vorhergehenden Ansprüche,
**dadurch gekennzeichnet,**
**dass** das Übermitteln des Freigabecodes an die Steuereinrichtung (14) ein Eingeben (36) des Freigabecodes an der Steuereinrichtung (14) der Maschine (1) durch den Bediener umfasst.

5. Verfahren (21) nach einem der vorhergehenden Ansprüche,
**dadurch gekennzeichnet,**
**dass** der Code (18) wenigstens eine der folgenden Informationen enthält:
- Die Seriennummer der Maschine (1),
- den Standort der Maschine, beispielsweise als GPS-Koordinaten,
- eine aktuelle Uhrzeit am Standort der Maschine (1), insbesondere in koordinierter Weltzeit (UTC),
- die Betriebszeit der Maschine (1),
- die Betriebszeit einer Arbeitseinrichtung der Maschine (1), insbesondere eines Antriebsmotors (4), eines Vibrationsantriebs, einer Fräswalze (11), einer Bohlenheizung und/oder einer Einbaubohle (7),
- die Betriebszeit eines Verschleißteils der Maschine (1), insbesondere eines Luftfilters, eines Ölfilters, eines Abstreifers, eines Riemens, eines Auswerfers, einer Fahreinrichtung und/oder eines Verschleißpads,
- eine Identifikation des Codes (18),
- die Art der Wartung, deren Wartungsintervall abgelaufen ist,
- die gewünschte Funktionsumfangserweiterung,
- eine aktuelle Ölqualität, beispielsweise eines Hydrauliköls oder eines Motoröls,
- den Stand eines von der Steuereinrichtung (14) umfassten Zählers, der beispielsweise die Anzahl der Maschinenstarts zählt,
- die aktuelle Maschinenkonfiguration, insbesondere Maschinenhardware und/oder Maschinensoftware.

6. Verfahren (21) nach einem der vorhergehenden Ansprüche,
**dadurch gekennzeichnet,**
**dass** am zentralen Server (45) und/oder am mobilen Endgerät (44)
- eine hierarchische Struktur mit mindestens zwei Serviceleveln hinterlegt ist, wobei dem Benutzer des mobilen Endgeräts (44) ein Servicelevel zugewiesen ist, und wobei das mobile Endgerät (44) dem Benutzer nach dem Identifizieren des Codes (18) je nach seinem Servicelevel unterschiedliche Informationen anzeigt und/oder
- ein Überprüfen (27) erfolgt, ob die aktuelle Maschinenkonfiguration, insbesondere Maschinenhardware und/oder Maschinensoftware, die gewünschte Funktionsumfangserweiterung zulässt und/oder
- ein Überprüfen (29) des Servicelevels des Benutzers des mobilen Endgeräts (44) durchgeführt wird und die weiteren Schritte, insbesondere das Übermitteln (35) des Freigabecodes vom Server (45) an das mobile Endgerät (44), nur durchgeführt werden, wenn das Servicelevel des Benutzers ausreicht.

7. Verfahren (21) nach einem der vorhergehenden Ansprüche,
**dadurch gekennzeichnet,**
**dass** am mobilen Endgerät (44) ein Erstellen (39) eines Auftrags für eine Funktionsumfangserweiterung erfolgt und an den zentralen Server (45) übermittelt wird, wobei der zentrale Server (45) insbesondere ein Übermitteln (40) einer Zahlungsanforderung an das mobile Endgerät (44) durchführt.

8. Verfahren (21) nach einem der vorhergehenden Ansprüche,
**dadurch gekennzeichnet,**
**dass** am zentralen Server (45) oder am mobilen Endgerät (44) ein Überprüfen (31) eines Zahlungseingangs erfolgt und die weiteren Schritte, insbesondere das Übermitteln (35) des Freigabecodes vom Server (45) an das mobile Endgerät (44), nur durchgeführt werden, wenn ein Zahlungseingang festgestellt wurde.

9. Verfahren (21) nach einem der vorhergehenden Ansprüche,
**dadurch gekennzeichnet,**
**dass** am zentralen Server (45) oder am mobilen Endgerät (44) ein Erstellen (34) des Freigabecodes erfolgt, wobei der Freigabecode insbesondere derart erstellt wird, dass er nur für die betreffende Maschine (1) und/oder nur für einen begrenzten Zeitraum gültig ist.

10. Verfahren (21) nach einem der vorhergehenden Ansprüche,
**dadurch gekennzeichnet,**
**dass** das Freischalten (37) der Funktionsumfangserweiterung und/oder der Freigabecode zeitlich unbegrenzt oder zeitlich begrenzt gilt.

11. Verfahren (21) nach einem der vorhergehenden Ansprüche,
**dadurch gekennzeichnet,**
**dass** dem Bediener am mobilen Endgerät (44) bei einem negativen Ergebnis einer Überprüfung (27, 29, 31, 43) eine Informationsausgabe angezeigt wird, insbesondere mit einer Anleitung zur Problembehebung und/oder einem Kontakt zu einem Servicepartner.

12. Verfahren (21) nach einem der vorhergehenden Ansprüche,
**dadurch gekennzeichnet,**
**dass** der Bediener eine gewünschte Funktionsumfangserweiterung aus einer Liste aller möglichen Funktionsumfangserweiterungen an der Steuereinrichtung (14) auswählt und/oder dass die Steuereinrichtung (14) dem Bediener während der Bedienung der Maschine (1) Vorschläge zu verfügbaren Funktionsumfangserweiterungen aktuell benutzter Funktionen und/oder aktuell freigeschalteter Funktionsumfangserweiterungen der Maschine (1) macht, die vom Bediener auswählbar sind.

13. Verfahren (21) nach einem der vorhergehenden Ansprüche,
**dadurch gekennzeichnet,**
**dass** die Funktionsumfangserweiterung wenigstens eine der folgenden Funktionen betrifft:
- Kantenschneidgerät rechts und/oder links,
- schnellere oder langsamere Hundegangverstellung,
- Splittstreuer,
- Kreiselsplittstreuer,
- Schnittstelle Messtechnik,
- Hinderniserkennung,
- Wegfahrsperre,
- Funkfernsteuerung,
- Telematik,
- Sitzverstellung,
- Tastenbelegung Fahrhebel,
- Freilauf Mengenteiler aktivieren,
- Mengenteilerautomatik aktivieren,
- Fahrhebel Rampeneinstellung,
- Tippbetrieb,
- Rundumkennleuchte,
- Coming/ Leaving Home,
- Reifendruckregelanlage,
- ECO Stop,
- Verdichtungsüberwachung,
- Anzeigemodi Verdichtungskontrolle,
- Spiegelverstellung,
- Rückfahrkamera,
- Birdview,
- Drohnenkamera,
- virtual Reality,
- Asphalttemperatursensor,
- Maschinenautonomie oder -teilautonomie, wie Steuerautomatik, automatisches Folgen, automatisches Kantenandrücken,
- Nivellierautomatik,
- geteiltes Abstreiferschild,
- AdBlue Befüllpumpe,
- Staubabsaugung,
- Seitenschildkamera,
- Aktivierung der Fräswalze bei Rückwärtsfahrt,
- Druckluftsystem.

14. Verfahren (21) nach einem der vorhergehenden Ansprüche,
**dadurch gekennzeichnet,**
**dass** am zentralen Server (45) aus den übermittelten, im Code (18) enthaltenen Informationen, und insbesondere auch den freigeschalteten Wartungsintervallen und/oder Funktionsumfangserweiterungen, eine Maschinenhistorie erstellt und gespeichert wird.

15. Verfahren (21) nach einem der vorhergehenden Ansprüche,
**dadurch gekennzeichnet,**
**dass** ein Durchführen (46) von Wartungsarbeiten an der Maschine (1) erforderlich ist, bevor der Freigabecode übermittelt wird.

16. Funktions- oder Wartungsmanagementsystem (51) eingerichtet zur Durchführung des Verfahrens (21) gemäß einem der vorhergehenden Ansprüche, umfassend eine selbstfahrende Maschine (1), insbesondere Tandemwalze, Walzenzug, Gummiradwalze, Müllverdichter, Straßenfertiger, Straßenfräse, Recycler oder Stabilisierer, mit einer Steuereinrichtung (14) und einer Anzeigeeinrichtung (15), ein mobiles Endgerät (44) und einen zentralen Server (45).

## Claims

1. Method (21) for the maintenance or extension of the range of functions of a self-propelled machine (1), in particular a tandem roller, single-drum roller, rubber-wheeled roller, refuse compactor, road finisher, road milling machine, recycler or stabilizer,
**characterized by** the steps:
- generating a code (18), which can be identified at a short distance, by a control device (14) of the machine (1) either automatically by the control device (14) after a maintenance interval has expired or after a request by an operator for an extension of the range of functions, wherein the code (18) contains information about at least one machine state which changes in the course of operation of the machine (1),
- identifying the code (18) by a mobile terminal (44),
- transmitting (25) the information contained in the code (18) to a central server (45),
- transmitting (35) a release code from the server (45) to the mobile terminal (44),
- transmitting the release code to the control device (14) of the machine (1),
- enabling (37) the maintenance interval or the extension of the range of functions.

2. Method (21) according to claim 1,
**characterized in that**
the code (18) which can be identified at a short distance comprises a signal for wireless transmission of data, in particular an NFC, Bluetooth, WLAN, RFID or infrared signal.

3. Method (21) according to one of the preceding claims,
**characterized in that**
the code (18) which can be identified at a short distance is an optoelectronically readable code (18), and **in that** the optoelectronically readable code (18) is displayed (23) on a display device (15) of the control device (14), wherein in particular the identification of the code (18) comprises reading (24) of the optoelectronically readable code (18) by a mobile terminal (44).

4. Method (21) according to one of the preceding claims,
**characterized in that**
transmitting the release code to the control device (14) comprises entering (36) the release code at the control device (14) of the machine (1) by the operator.

5. Method (21) according to any of the preceding claims,
**characterized in that**
the code (18) contains at least one of the following pieces of information:
- the serial number of the machine (1),
- the location of the machine, for example as GPS coordinates,
- a current time at the location of the machine (1), especially in coordinated universal time (UTC),
- the operating time of the machine (1),
- the operating time of a working device of the machine (1), in particular a drive motor (4), a vibration drive, a milling drum (11), a screed heating system and/or a paving screed (7),
- the operating time of a wear part of the machine (1), in particular an air filter, an oil filter, a scraper, a belt, an ejector, a travel device and/or a wear pad,
- an identification of the code (18),
- the type of maintenance whose maintenance interval has expired,
- the desired extension of the range of functions,
- a current oil quality, for example of a hydraulic oil or an engine oil,
- the status of a counter comprised by the control device (14), which counts, for example, the number of machine starts,
- the current machine configuration, in particular machine hardware and/or machine software.

6. Method (21) according to one of the preceding claims,
**characterized in that**
at the central server (45) and/or at the mobile terminal (44)
- a hierarchical structure with at least two service levels is stored, wherein the user of the mobile terminal (44) is assigned a service level, and wherein the mobile terminal (44) displays different information to the user after the code (18) has been identified, depending on the user's service level, and/or
- a verification (27) is carried out as to whether the current machine configuration, in particular machine hardware and/or machine software, permits the desired extension of the range of functions, and/or
- a verification (29) of the service level of the user of the mobile terminal (44) is carried out, and the further steps, in particular the transmission (35) of the release code from the server (45) to the mobile terminal (44), are only carried out if the service level of the user is sufficient.

7. Method (21) according to one of the preceding claims,
**characterized in that**
an order for an extension of the range of functions is created (39) at the mobile terminal (44) and is transmitted to the central server (45), wherein the central server (45) in particular performs a transmission (40) of a payment request to the mobile terminal (44).

8. Method (21) according to one of the preceding claims,
**characterized in that**
a verification (31) of a receipt of payment is performed at the central server (45) or at the mobile terminal (44) and the further steps, in particular the transmission (35) of the release code from the server (45) to the mobile terminal (44), are only performed if a receipt of payment has been detected.

9. Method (21) according to one of the preceding claims,
**characterized in that**
the release code is created (34) at the central server (45) or at the mobile terminal (44), wherein the release code is created in particular in such a way that it is valid only for the relevant machine (1) and/or only for a limited period of time.

10. Method (21) according to one of the preceding claims,
**characterized in that**
enabling (37) the extension of the range of functions and/or the release code is valid for an unlimited period of time or for a limited period of time.

11. Method (21) according to one of the preceding claims,
**characterized in that**
an information output is displayed to the operator on the mobile terminal (44) in the event of a negative result of a verification (27, 29, 31, 43), in particular with instructions for solving the problem and/or a contact to a service partner.

12. Method (21) according to one of the preceding claims,
**characterized in that**
the operator selects a desired extension of the range of functions from a list of all possible extensions of the range of functions on the control device (14) and/or **in that** the control device (14) makes suggestions to the operator during operation of the machine (1) regarding available extensions of the range of functions of currently used functions and/or currently enabled extensions of the range of functions of the machine (1), which can be selected by the operator.

13. Method (21) according to any one of the preceding claims,
**characterized in that**
the extension of the range of functions concerns at least one of the following functions:
- edge cutter right and/or left,
- faster or slower crab steering,
- grit spreader,
- traffic circle grit spreader,
- interface metrology,
- obstacle detection,
- immobilizer,
- radio remote control,
- telematics,
- seat adjustment,
- key assignment of control lever,
- activate free-running flow divider,
- activate automatic flow divider,
- travel lever ramp adjustment,
- typing operation,
- rotating beacon,
- coming / leaving home,
- tire pressure control system,
- ECO stop,
- compaction monitoring,
- display modes compaction control,
- mirror adjustment,
- rear view camera,
- bird view,
- drone camera,
- virtual reality,
- asphalt temperature sensor,
- machine autonomy or partial autonomy, such as automatic control, automatic following, automatic edge pressing,
- automatic leveling,
- split scraper blade,
- Ad Blue filling pump,
- dust extraction,
- side shield camera,
- activation of the milling drum during reverse travel,
- compressed air system.

14. Method (21) according to one of the preceding claims,
**characterized in that**
a machine history is created and stored at the central server (45) from the transmitted information contained in the code (18), and in particular also the enabled maintenance intervals and/or extensions of the range of functions.

15. Method (21) according to any of the preceding claims,
**characterized in that**
performing (46) maintenance work on the machine (1) is required before the release code is transmitted.

16. Function or maintenance management system (51) arranged for carrying out the method (21) according to one of the preceding claims, comprising a self-propelled machine (1), in particular a tandem roller, single-drum roller, rubber-wheeled roller, refuse compactor, road finisher, road milling machine, recycler or stabilizer, with a control device (14) and a display device (15), a mobile terminal (44) and a central server (45).

## Revendications

1. Procédé (21) pour la maintenance ou l'extension de la gamme de fonctions d'un engin automoteur (1), en particulier d'un rouleau tandem, d'un rouleau monocylindre, d'un rouleau compresseur à pneus, d'un compacteur de déchets, d'un finisseur routier, d'une fraiseuse routière, d'un recycleur ou d'un stabilisateur,
***caractérisé par*** les étapes de:
- génération d'un code (18) qui peut être identifié à courte distance par un dispositif de commande (14) de l'engin (1), soit automatiquement par le dispositif de commande (14) après qu'un intervalle de maintenance ait expiré ou après une demande par un opérateur pour une extension de la gamme des fonctions, le code (18) contenant des informations concernant au moins un élément qui change pendant le fonctionnement de l'engin (1),
- identification du code (18) par un terminal mobile (44),
- transmission (25) des informations contenues dans le code (18) à un serveur central (45),
- transmission (35) d'un code de libération du serveur (45) au terminal mobile (44),
- transmission du code de libération au dispositif de commande (14) de l'engin (1),
- activation (37) de l'intervalle de maintenance ou de l'extension de la gamme de fonctions.

2. Procédé (21) selon la revendication 1,
***caractérisé en ce que***
le code (18) qui peut être identifié à courte distance comprend un signal pour la transmission de données sans fil, en particulier un signal NFC (communication en champ proche), un signal Bluetooth, WLAN, RFID ou infrarouge.

3. Procédé (21) selon l'une quelconque des revendications précédentes,
***caractérisé en ce que***
le code (18) qui peut être identifié à courte distance est un code (18) lisible de manière opto-électronique, et ***en ce que*** le code (18) lisible de manière opto-électronique est affiché (23) sur un dispositif d'affichage (15) du dispositif de commande (14), dans lequel en particulier l'identification du code (18) comprend la lecture (24) du code (18) lisible de manière opto-électronique par un terminal mobile (44).

4. Procédé (21) selon l'une quelconque des revendications précédentes,
***caractérisé en* ce *que***
la transmission du code de libération au dispositif de commande (14) comprend l'entrée (36) du code de libération dans le dispositif de commande (14) de l'engin (1) par l'opérateur.

5. Procédé (21) selon l'une quelconque des revendications précédentes,
***caractérisé en ce que***
le code (18) contient au moins l'un des éléments d'information suivants:
- le numéro de série de l'engin (1),
- l'emplacement de l'engin, par exemple des coordonnées GPS,
- une heure actuelle à l'emplacement de l'engin (1), tout particulièrement exprimée en temps universel coordonné (UTC),
- la durée de fonctionnement de l'engin (1),
- la durée de fonctionnement d'un dispositif opérationnel de l'engin (1), en particulier d'un moteur d'entraînement (4), d'un entraînement vibrant, d'un tambour de fraisage (11), d'un système de chauffage de la table et/ou d'une poutre finisseuse (7),
- la durée de fonctionnement d'une pièce consommable de l'engin (1), en particulier d'un filtre à air, d'un filtre à huile, d'un racleur, d'une courroie, d'un éjecteur, d'un dispositif de déplacement, et/ou d'un coussinet d'usure,
- une identification du code (18),
- le type de maintenance dont l'intervalle de maintenance est expiré,
- l'extension désirée de la gamme de fonctions,
- une qualité actuelle d'huile, par exemple d'une huile hydraulique ou d'une huile moteur,
- le statut d'un compteur compris dans le dispositif de commande (14) qui compte par exemple le nombre de démarrages de l'engin,
- la configuration actuelle de l'engin, en particulier du matériel de l'engin et/ou du logiciel de l'engin.

6. Procédé (21) selon l'une quelconque des revendications précédentes,
***caractérisé en ce que***
sur le serveur central (45) et/ou sur le terminal mobile (44)
- une structure hiérarchique avec au moins deux niveaux de service est stockée, il est attribué à l'utilisateur du terminal mobile (44) un niveau de service, et le terminal mobile (44) affiche différentes informations à l'utilisateur une fois que le code (18) a été identifié, en fonction du niveau de service attribué à l'utilisateur, et/ou
- une vérification (27) est effectuée pour savoir si la configuration actuelle de l'engin, en particulier du matériel de l'engin et/ou du logiciel de l'engin, permet l'extension désirée de la gamme de fonctions, et/ou
- une vérification (29) du niveau de service de l'utilisateur du terminal mobile (44) est effectuée, et les étapes ultérieures, en particulier la transmission (35) du code de libération du serveur (45) au terminal mobile (44) ne sont réalisées que si le niveau de service de l'utilisateur est suffisant.

7. Procédé (21) selon l'une quelconque des revendications précédentes,
***caractérisé en ce que***
un ordre pour une extension de la gamme de fonctions est créé (39) sur le terminal mobile (44) et est transmis au serveur central (45), le serveur central (45) effectuant en particulier une transmission (40) d'une requête de paiement au terminal mobile (44).

8. Procédé (21) selon l'une quelconque des revendications précédentes,
***caractérisé en ce que***
une vérification (31) d'un reçu de paiement est effectuée sur le serveur central (45) ou sur le terminal mobile (44) et les étapes ultérieures, en particulier la transmission (35) du code de libération du serveur (45) au terminal mobile (44) ne sont réalisées que si un reçu de paiement a été détecté.

9. Procédé (21) selon l'une quelconque des revendications précédentes,
***caractérisé en ce que***
le code de libération est créé (34) sur le serveur central (35) ou sur le terminal mobile (44), le code de libération étant créé en particulier de telle sorte qu'il ne soit valide que pour l'engin concerné (1) et/ou seulement pour une durée limitée.

10. Procédé (21) selon l'une quelconque des revendications précédentes,
***caractérisé en ce que***
l'activation (37) de l'extension de la gamme de fonctions et/ou du code de libération est valide pour une durée illimitée ou pour une durée limitée.

11. Procédé (21) selon l'une quelconque des revendications précédentes,
***caractérisé en ce que***
une sortie des informations est affichée pour l'opérateur sur le terminal mobile (44) dans l'éventualité d'un résultat négatif d'une vérification (27, 29, 31, 43), en particulier avec des instructions pour résoudre le problème et/ou pour un contact avec un partenaire de service.

12. Procédé (21) selon l'une quelconque des revendications précédentes,
***caractérisé en ce que***
l'opérateur sélectionne une extension donnée de la gamme de fonctions à partir d'une liste de toutes les extensions possibles de la gamme de fonction sur le dispositif de commande (14) et/ou ***en ce que*** le dispositif de commande (14) fait des suggestions à l'opérateur pendant le fonctionnement de l'engin (1) concernant les extensions disponibles de la gamme de fonctions couramment utilisées et/ou d'extensions couramment autorisées dans la gamme de fonctions de l'engin (1) qui peuvent être choisies par l'opérateur.

13. Procédé (21) selon l'une quelconque des revendications précédentes,
***caractérisé en ce que***
l'extension de la gamme de fonctions concerne au moins l'une des fonctions ci-dessous :
- coupe-bordure droit et/ou gauche,
- marche en crabe plus ou moins rapide,
- épandeur à gravier,
- épandeur à gravier pour rond-point,
- interface métrologie,
- détection d'obstacles,
- système anti-démarrage,
- télécommande par radio,
- télématique,
- réglage du siège,
- affectation des touches de fonction du levier de commande,
- activation diviseur de débit libre,
- activation diviseur de débit automatique,
- réglage du levier de contrôle de la rampe
- commande pas à pas
- gyrophare
- fonctions arrivée et départ (« Coming Home / Leaving Home »)
- système de contrôle de la pression des pneumatiques
- fonction ECO Stop/Start
- supervision compactage
- commande modes affichage compactage
- réglage rétroviseur
- caméra de recul
- vue d'oiseau (« bird view »)
- caméra drone
- réalité virtuelle
- capteur de température de l'asphalte
- autonomie engin ou autonomie partielle, par ex. contrôle automatique, suivi automatique, pression rebord automatique,
- nivellement automatique,
- partage lame racleuse,
- pompe de remplissage d'AdBlue,
- extraction poussière,
- caméra protection latérale,
- activation tambour de fraisage pendant marche arrière,
- système air comprimé.

14. Procédé (21) selon l'une quelconque des revendications précédentes,
***caractérisé en ce que***
un historique de l'engin est créé et stocké dans le serveur central (45) à partir des informations transmises contenues dans le code (18), et en particulier en ce qui concerne les intervalles de maintenance activés et/ou les extensions de la gamme de fonctions.

15. Procédé (21) selon l'une quelconque des revendications précédentes,
***caractérisé en ce que***
une mise en oeuvre (46) du travail de maintenance sur l'engin (1) est nécessaire avant que le code de libération ne soit transmis.

16. Système (51) de gestion de fonctions ou de maintenance prévu pour la mise en oeuvre du procédé (21) selon l'une quelconque des revendications précédentes, comprenant un engin automoteur (1), en particulier un rouleau tandem, un rouleau monocylindre, un rouleau compresseur à pneus, un compacteur de déchets, un finisseur routier, une fraiseuse routière, un recycleur ou un stabilisateur, avec un dispositif de commande (14) et un dispositif d'affichage (15), un terminal mobile (44) et un serveur central (45).
